(19) Europäisches Patentamt
European Patent Office
Office européen des brevets

(11) **EP 0 935 130 A1**

(12) **EUROPEAN PATENT APPLICATION**
published in accordance with Art. 158(3) EPC

(43) Date of publication:
**11.08.1999 Bulletin 1999/32**

(51) Int. Cl.[6]: **G01M 17/007**, G01M 15/00,
B60R 16/02, F02D 45/00

(21) Application number: **98905830.0**

(22) Date of filing: **10.03.1998**

(86) International application number:
**PCT/JP98/00975**

(87) International publication number:
**WO 98/40715 (17.09.1998 Gazette 1998/37)**

(84) Designated Contracting States:
**DE GB**

(30) Priority: **10.03.1997 JP 7091097**

(71) Applicants:
• **Honda Giken Kogyo Kabushiki Kaisha
Minato-ku, Tokyo 107-8556 (JP)**
• **Sasaki, Kazumune
Sayama-shi, Saitama 350-1392 (JP)**
• **Hashimoto, Akira
Wako-shi, Saitama 351-0193 (JP)**

(72) Inventors:
• **SASAKI, Kazumune,
Saitama Factory Sayama
Sayama-shi Saitama 350-1392 (JP)**
• **HASHIMOTO, Akira,
K.K. Honda Gijutsu Kenkyusho
Wako-shi Saitama 351-0193 (JP)**

(74) Representative: **HOFFMANN - EITLE
Patent- und Rechtsanwälte
Arabellastrasse 4
81925 München (DE)**

(54) **METHOD AND DEVICE FOR DIAGNOSIS FOR VEHICLE**

(57) Forced activation signal supplying means 550 supplies a forced activation signal Sx to a diagnostic target part 101 related to a diagnostic item requiring a forced activation signal. Vehicle-state detection means 552 detects a current state of the diagnostic target part 101 through an ECU 1. Diagnostic means 553 compares the currently detected state of the diagnostic target part 101 with a state predicted when the forced activation signal Sx is given to diagnose the diagnostic target part 101. When the forced activation signal Sx is supplied to the part of the vehicle, self-diagnosis stopping means 554 gives an instruction to stop a self diagnosis for at least an item the diagnostic result of which may vary under the influence of the forced activation signal Sx, or to invalidate the diagnostic result.

FIG.7

EP 0 935 130 A1

## Description

Technical Field

This invention relates to vehicle diagnostic method and apparatus, and in particular, to the vehicle diagnostic method and apparatus capable of preventing a vehicle-mounted self-diagnostic function from causing a wrong diagnosis result even when an external diagnostic apparatus supplies a particular part of a vehicle to be diagnosed with a forced activation signal to forcibly actuate the particular part, which diagnostic apparatus communicates with an electronic control unit mounted on the vehicle to diagnose the vehicle.

Background Art

To improve engine control functions, an electronic control unit (ECU) with a microcomputer has been used in recent years for executing control programs, such as control of ignition timing in an engine, control of valve opening and closing timing, and/or control of fuel injection in an electronic fuel injector (EFI) for an automobile (hereinafter, referred to as a "vehicle"). The ECU is connected to sensors, such as a temperature sensor for detecting a temperature of engine cooling water, an engine-speed sensor for detecting an engine speed, a vehicle-speed sensor for detecting a vehicle speed, an O2 sensor for detecting an oxygen concentration in exhaust gas, and various switches including a brake switch for detecting that a driver has stepped on a brake pedal. The ECU thus executes various kinds of controls based on detection signals output from the sensors and others.

On the production line where vehicles with such an ECU are manufactured, in the final test process after assembled, it should be diagnosed whether or not each of sensor and the like, and the ECU itself functions normally. For example, Japanese patent publication No. Hei 3-59372 proposes a diagnostic method in which a diagnostic apparatus with a microcomputer executes a vehicle diagnostic program to diagnose a desired diagnostic item at scheduled timing.

In a failure diagnosis related to a plurality of diagnostic items, for example, as disclosed in Japanese patent publication No. Sho 61-25091, the plurality of diagnostic items are diagnosed in predetermined order and the results of pass/failure or displayed judgment in respective diagnostic items are output one by one on a display device.

Some of such vehicle diagnostic items, such as an "Ne Diagnosis" to determine whether or not an engine speed Ne at idling time is in a given range, and a "Brake Switch Diagnosis" to diagnose an opening and closing function of a brake switch, can be executed in a relatively easy way in an inspection process. The inspection process under limited conditions, however, makes it difficult to realize actually effective running conditions for some other diagnoses such as one to diagnose a function for controlling valve opening and closing timing in accordance with predetermined parameters, e.g., the vehicle running speed and/or the engine speed, and one to diagnose an evaporation system for collecting fuel gas evaporated from a fuel tank and supplying it to the engine when predetermined operating conditions are satisfied (hereinafter, referred to as an "EVP Diagnosis"). For diagnoses related to such diagnostic items, a diagnostic technique may be considered in which the ECU supplies a forced activation signal to each associated part to forcibly actuate the valve or evaporation system so as to diagnose it as being good or bad based on whether or not an actually obtained (or observed) state of the valve or evaporation system is in a state predicted corresponding to the forced activation signal.

On the other hand, recent ECUs are equipped with respective self-diagnostic functions. When such a self-diagnostic function detects an out-of-range abnormal signal at its input terminal with which various sensors are connected, it regards the vehicle as having trouble with a corresponding part, and stores in a memory a code (failure code) for identifying the part from which the abnormal signal is output and the value of the abnormal signal (failure data). The failure code and data can be read from the ECU using a special-purpose device at an auto repair shop for determination of the state and contents of the failure.

In a vehicle with such a self-diagnostic function mounted thereon, for example, when the evaporation system supplies the engine with fuel collected in a canister in response to the forced activation signal irrespective of the normal control procedure, the O2 sensor for detecting an oxygen concentration in exhaust gas may show an abnormal value, or there may be a misfiring. This causes a problem that the self-diagnostic apparatus may wrongly diagnose a self-diagnostic item using such a detected value as a wrong parameter.

Disclosure of Invention

It is an object of the present invention to provide vehicle diagnostic method and apparatus capable of preventing a vehicle-mounted self-diagnostic function from wrongly diagnosing a self-diagnostic item based on an actual state of a corresponding part of the vehicle even in a case where the part shows a state different from a normal state when an external diagnostic apparatus supplies the part with such a forced activation signal as to forcibly actuate the part.

The present invention is characterized as follows:

(1) In a vehicle diagnostic method for supplying a forced activation signal from the outside to predetermined parts of a vehicle provided with a self-diagnostic function to make external diagnoses based on whether or not an actually detected state of the vehicle is in a state predicted corresponding to the forced activation signal, a self diagnosis for at least an item or items the diagnostic result of which may vary under the influence of the forced activation signal is inhibited diring the external diagnoses.

(2) In a vehicle diagnostic apparatus for supplying a forced activation signal from the outside to predetermined parts of a vehicle provided with a self-diagnostic function to make external diagnoses independent of self diagnoses based on whether or not an actually detected state of the vehicle is in a state predicted corresponding to the forced activation signal, the apparatus comprises forced activation signal supplying means for supplying a forced activation signal to a diagnostic target part related to a corresponding diagnostic item; state detection means for detecting a current state of the diagnostic target part; diagnostic means for comparing the currently detected state of the diagnostic target part with a state predicted when the forced activation signal is supplied thereto to diagnose the target part; and self-diagnosis inhibition instruction means for giving an instruction to inhibit a self diagnosis during supplying of the forced activation signal.

(3) In a diagnostic apparatus mounted on a vehicle for diagnosing each part of the vehicle, the apparatus comprises self-diagnosis inhibition means for stopping at least a self diagnosis for an item the diagnostic result of which can vary under the influence of the forced activation signal during a forced activation signal is input from the outside of the vehicle so that a part of the vehicle is forcibly actuated for an external diagnosis.

According to the vehicle diagnostic method and apparatus thus configured, when an external diagnostic apparatus supplies such a forced activation signal as to forcibly actuate a part of the vehicle for an external diagnosis, and the part is expected to be actuated in a way different from a normal state, a self diagnosis related to the part expected to be actuated in the different way can be stopped, thereby preventing a self-diagnostic apparatus from causing a wrong diagnostic result due to the forced activation signal.

Brief Description of Drawings

Fig. 1 is a block diagram showing a configuration of an ECU 1 mounted on a vehicle to be diagnosed and a vehicle diagnostic apparatus 2 according to the present invention;
Fig. 2 is a schematic diagram showing the contents of a ROM card 7;
Fig. 3 is a diagram showing the contents of a diagnostic item management table 71;
Fig. 4 is a diagram showing the contents of a unique data storage area 74;
Fig. 5 is a diagram showing the contents of a standard data storage area 73;
Figs. 6A-F are diagrams each showing exemplary results of diagnosis indicated on a display 27;
Fig. 7 is a functional block diagram of the vehicle diagnostic apparatus according to the present invention;
Fig. 8 is a flowchart showing a main flow of a vehicle diagnostic program according to the present invention;
Fig. 9 is a flowchart showing an operation of an initial processing;
Fig. 10 is a flowchart showing an operation of a vehicle-speed sensor diagnosis;
Fig. 11 is a flowchart showing an operation of an EGR diagnosis;
Fig. 12 is a flowchart showing an operation of an EVP diagnosis;
Fig. 13 is a block diagram of an evaporation system;
Fig. 14 is a flowchart showing an operation of a VT diagnosis;
Figs. 15 and 16 show a flowchart of an Ne diagnosis when combined each other.
Fig. 17 is a flowchart showing an operation of each switch system diagnosis;
Fig. 18 is a flowchart showing an operation of an end processing; and

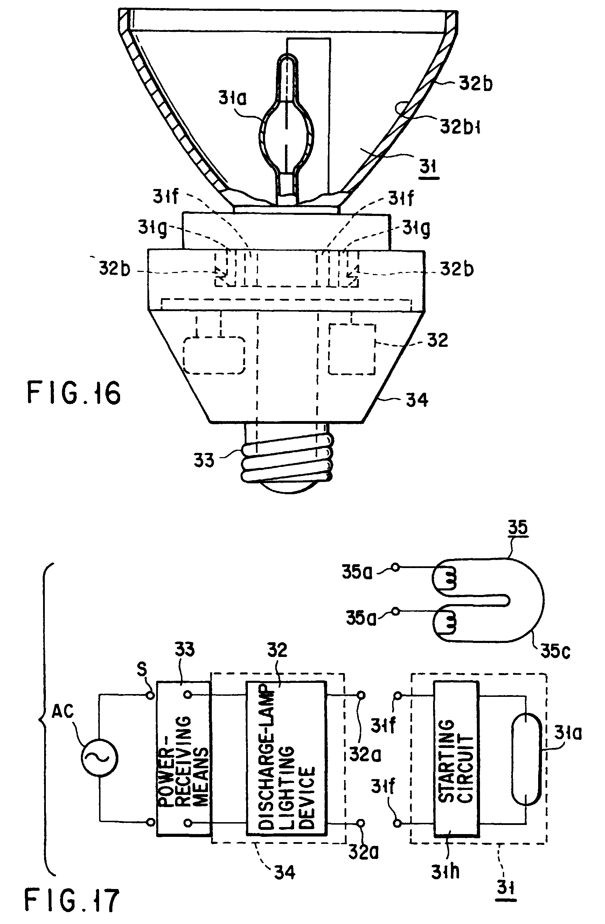

Fig. 19 is a flowchart showing an operation of a standby mode processing.
Fig. 20 is a functional block diagram of a second embodiment according to the present invention.

Best Mode for Embodying the Invention

Referring now to the drawings, the present invention will be described in detail below.

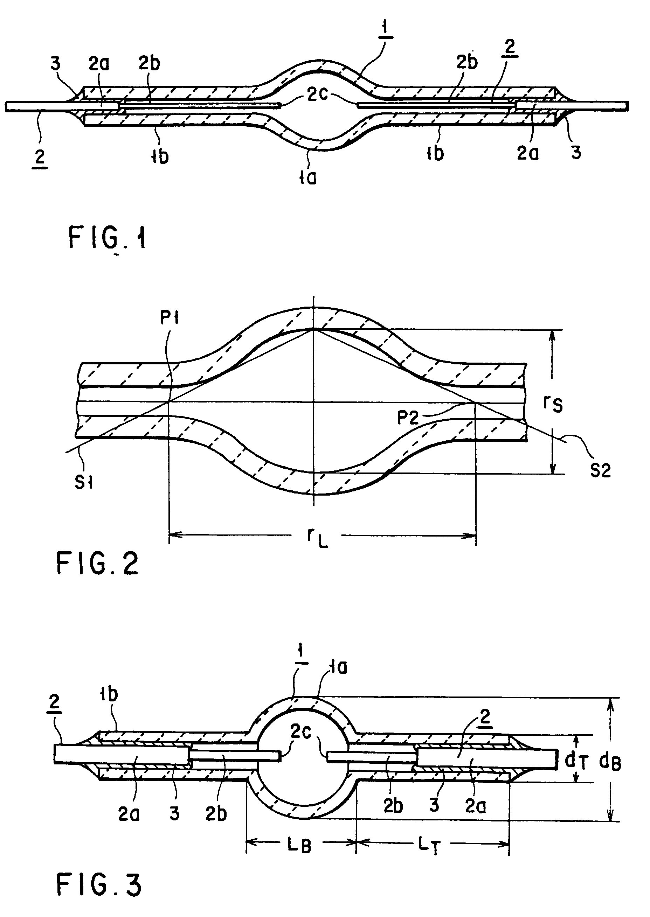

In Fig. 1, the ECU 1 is constituted of a CPU 10, a ROM 11, a RAM 12, a driver 13, an A/D converter 14, and a communication interface 15. The ECU 1 is connected to peripherals devices through connectors 16 and 17. For example, actuators 3 are connected with the connector 16, while various types of sensors and switches 4 are connected with the connector 17. The ECU 1 is also connected by a connector 18 to a communication cable 5 of the vehicle diagnostic apparatus 2 through a connector 34.

Signals from each sensor 4 or the like are input to the ECU 1. In the ECU 1, the signals are converted by the A/D converter 14 into digital signals and read into the CPU 10. The signals read in the CPU 10 are processed with control data stored in the ROM 11 and the RAM 12 according to a control program stored in the ROM 11. The CPU 10 provides a command signal to the driver 13 in accordance with the processing result. The driver 13 provides power for each actuator 3 in response to the command signal input. The ROM 11 stores not only the program but also identification codes or ECU codes assigned to each individual ECU 1.

The vehicle diagnostic apparatus 2 according to the present invention is constituted of a CPU 20, a ROM 21, a RAM 22, a transmitter 24, a communication interface 25, and a power source 29. By the power supply 29, either a vehicle battery 19 mounted on the vehicle to be diagnosed or an internal battery 23 is selected as a power supply of the vehicle diagnostic apparatus 2. The vehicle diagnostic apparatus 2 is also provided with a keyboard 26 for input of operator's instructions, a display 27 for displaying processing results of the CPU 20, a bar-code reader 31 for reading identification bar-codes, and a bar-code interface 32. In the present embodiment, a back-lighted liquid crystal display panel (LCD) is used as the display 27. Further, the keyboard 26 includes typical ten keys, cursor navigation keys, and some function keys.

The communication cable 5 is constituted of a signal line 51 and a power-supply line 52. The communication interface 15 of the ECU 1 and the communication interface 25 of the vehicle diagnostic apparatus 2 are connected through the signal line 51 so that two-way digital communications can be established between the CPU 10 and the CPU 20 . When connecting the communication cable 5 to the ECU 1, the power supply 29 provides the vehicle diagnostic apparatus 2 with power supplied by the vehicle battery 19 through the power-supply line 52, and simultaneously charges the internal battery 23.

As described later in detail, the vehicle diagnostic apparatus 2 is started or activated by the operator turning on a power supply key switch (not shown) on the keyboard 26, or connecting a connector 34 of the communication cable 5 to the connector 18 of the ECU 1 without operation of the power supply key switch. The vehicle diagnostic apparatus 2 after activated acts in different ways depending on which starting operation is done by the operator.

The ROM 21 stores a basic program for controlling the vehicle diagnostic apparatus 2, and associated control data. On the other hand, the ROM card 7 stores individual information to which a new information may be added and or which may be changed when manufacture a new type of car or the like, such as unique data used for each diagnosis routine and the vehicle diagnostic program. Data of the ROM card 7 are read into the CPU 20 through a ROM card interface 28.

Signals read from the ECU 1 are processed based on the basic data stored in the ROM 21 and the RAM 22, and the control data and the vehicle diagnostic program stored in the ROM card 7. The processing results, that is, the diagnostic results are temporarily stored into the RAM 22. The diagnostic results are output to the display 27 whenever the diagnosis of each vehicle is finished. The operator then causes the vehicle diagnostic apparatus 2 to transmit the data on the diagnostic results of several vehicles from the transmitter 24 to a host machine, such as a host computer 30, so as to be centrally controlled by the host computer 30 and stored in a mass storage device 33. Otherwise, the vehicle diagnostic apparatus 2 may be connected to an unillustrated personal computer that provides necessary information, such as an updated (version-up) failure diagnostic program, to the vehicle diagnostic apparatus 2.

As shown in Fig. 2, the ROM card 7 contains a diagnostic item management table 71 for use to select diagnostic items unique to engine type according to the ECU code, a vehicle diagnostic program storage area 72 for storing a vehicle diagnostic program related to a plurality of diagnostic items, a standard data storage area 73 for storing standard data commonly used for a plurality types of the vehicles irrespective of the type of the ECU mounted thereon, and a unique data storage area 74 for storing unique data the contents of which may vary according to each individual ECU.

Fig. 3 shows exemplary contents of the diagnostic item management table 71. The vehicle diagnostic apparatus 2 according to the present invention is able to diagnose various diagnostic items. Although the vehicle diagnostic apparatus 2 includes all algorithms for respective diagnostic items, since all of the items are not always diagnosed for every vehicles, that is, since the items to be diagnosed for each vehicle are usually different, each item in the management table 71 has an entry "1 (selected)" or "0 (not-selected)" for each ECU code. As an example, for a vehicle having an ECU code "○△×□" in Fig. 3, diagnostic items 1, 2, 5, 6, ... are selectively diagnosed and the other items are not diagnosed.

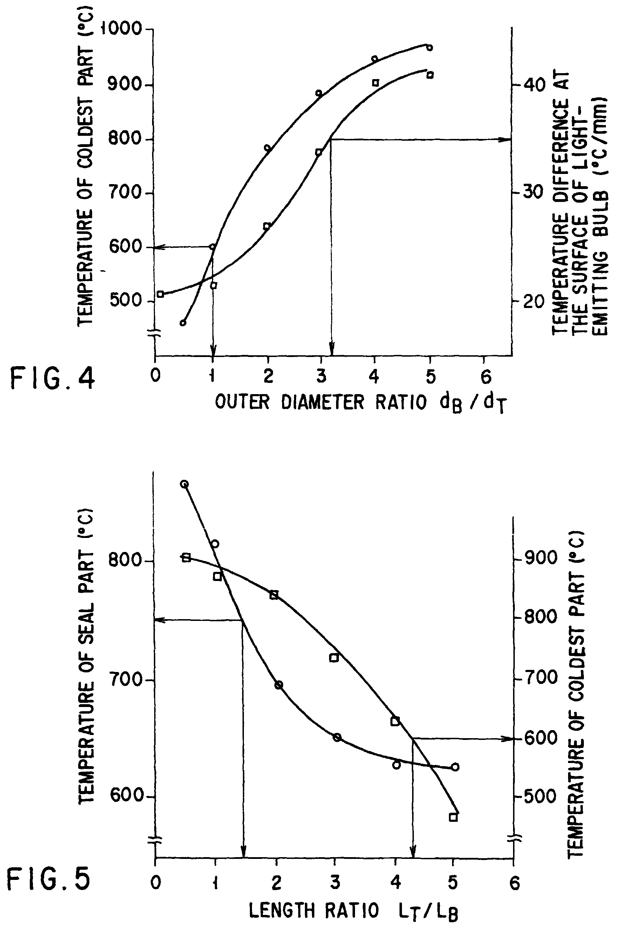

Fig. 4 shows the contents of the unique data storage area 74. In the present embodiment, the unique data storage area stores unique data the contents of which may vary according to each individual ECU (ECU code), such as an individual reference idling speed NID-ref registered in accordance with each individual ECU code. As described later in detail, the individual idling speed NID-ref denotes a reference engine speed or RPM when the engine is idling, which varies according to each individual ECU code. Therefore, the individual idling speed NID-ref relative to the individual ECU code of the vehicle to be diagnosed is compared with a detected engine speed Ne to diagnose whether the engine speed in the idling state is normal or abnormal.

In the present embodiment, different diagnostic routines, that is, a combination of diagnostic items, and associated unique data are automatically determined according to each individual ECU code, so that the operator is released from selecting operation of the diagnostic items and setting operation of the unique data. This reduces the operator load; besides, it increases the accuracy of each diagnosis because an error in selection of the diagnostic items and unique data is eliminated.

Fig. 5 shows the contents of the standard data storage area 73. The standard data storage area 73 contains standard data x1 to x5 commonly used in respective diagnostic processings of the diagnostic program irrespective of the ECU code.

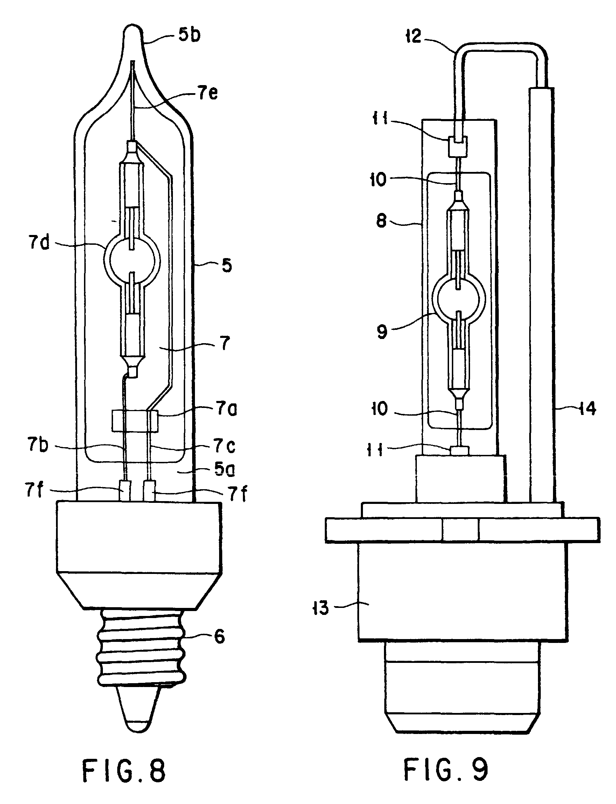

Next, operation of the present embodiment will be described with reference to flowcharts. Fig. 8 is a flowchart showing a main flow of a vehicle diagnostic program executed by the vehicle diagnostic apparatus according to the present invention. Although the vehicle diagnostic apparatus according to the present invention can be used for vehicle diagnosis under any environments, such as on the production line or at an auto repair shop, the present embodiment takes a case in which the "Inspection Process" is executed on the production line at a factory, by way of example to describe its operation.

In the present embodiment, a circulating diagnostic method is shown as an example, which circulates plural types of diagnoses repeatedly with a very short cycle irrespective of the pass/fail diagnostic result, and finally diagnoses a diagnostic item or items that remain not passed after scheduled time has elapsed as being failed. When using such a circulating diagnostic method, if the diagnostic cycle is set such that one execution cycle is finished while the operator is stepping on the brake pedal, the "Brake Switch Diagnosis" can be always executed without fail during the braking operation in spite of the sequence and timing of stepping on the brake pedal. This makes it possible to reduce limitations on the sequence and timing of operations to be performed for each diagnostic item, and hence to remarkably improve work efficiency.

In Fig. 8, step S100 executes an "Initial Processing". Step S200 executes a "Vehicle Speed Sensor Diagnosis" registered as a diagnostic item 1. Step S300 executes an "EGR (Exhaust Gas Recirculator) Diagnosis" registered as a diagnostic item 2. Step S400 executes an "EVP (Evaporation) Diagnosis" registered as a diagnostic item 3. Step S500 executes a "variable VT (Valve Timing) Diagnosis" registered as a diagnostic item 4. Step S600 executes an "Ne Diagnosis" registered as a diagnostic item 5. Step S700 executes a "Switch System Diagnosis", in which each of switches registered as diagnostic items 6, 7, .. .. are diagnosed. Step S800 executes an "End Processing" and step S900 executes a "Standby Mode Processing" . After the step S900, the program returns to the step S200 and the sequence of every diagnosis routines is repeated until all the diagnostic items are concluded, or until the process is stopped with a command of an operator or the like.

The vehicle diagnostic apparatus according to the present invention is thus designed to repeat a plurality of diagnoses related to various diagnostic items automatically during given execution cycles. Hereinbelow, each diagnostic method and processing method of each items will be described in detail.

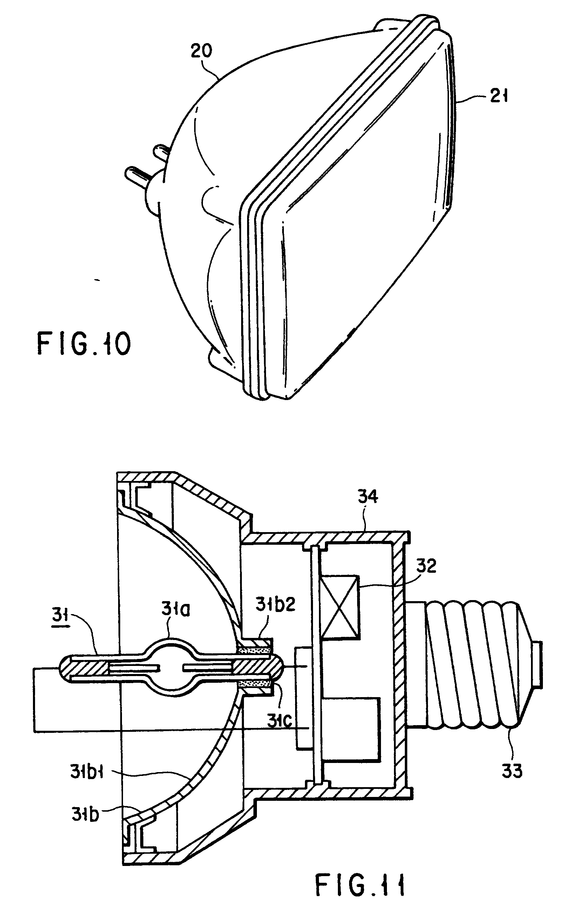

Fig. 9 is a flowchart showing an operation of the "Initial Processing" in step S100. As previously described, the vehicle diagnostic apparatus 2 according to the present invention is started or activated by the operator either turning on a power-supply switch on the keyboard 26, or connecting the communication cable 5 to the ECU 1. Therefore, the initial processing first determines which procedure is used for the power input.

Step S101 in Fig.9 determines whether or not the power is supplied to the vehicle diagnostic apparatus 2 by turning on the power-supply switch. If the judgement is affirmative, a flag Fst representing a power-on procedure is set to "1" in step S104. In this case, the internal battery 23 provides power for the vehicle diagnostic apparatus 2. If the judgement at step S104 is negative, step S102 determines whether or not the communication cable 5 has been connected to the vehicle (ECU 1). If it is affirmative, the flag Fst is set to "1" in step S103. In this case, the vehicle battery 19 provides power for the vehicle diagnostic apparatus 2.

When detecting either the power input by the switch or the power input by the cable connection, step S105 makes the display 27 show an initial image on its screen. Then, step S106 executes a self diagnosis for checking the abnormality or failure of the vehicle diagnostic apparatus 2 itself. When the result of the self-diagnosis is judged in step S107 to be passed, the program advances to step S108. If judged to be bad, step S119 makes the display 27 indicate an error message and the processing halts.

The step S108 checks the flag Fst to determine whether the subsequent processing to be executed should be selected by the operator from the menu image, or a predetermined, specific processing should automatically be executed. In the case where the flag Fst is "1", i.e., the power has been supplied by the cable connection, the "Vehicle Diagnosis" as predetermined particular process is started immediately according to the predetermined program without showing the menu screen on the display 27. The program then advances to step S109, in which the ECU code registered in the ECU 1 is read. Step S110 retrieves the diagnostic item management table 71, previously discussed with reference to Fig. 3, based on the ECU code thus read out, to select diagnostic items to be executed. Step S111 sets "1 (select)" as diagnostic selection flags Fselc XX (where "XX" is any one of diagnostic item numbers) for each selected diagnostic items, while for "0 (non-select)" for each non-selected diagnostic items.

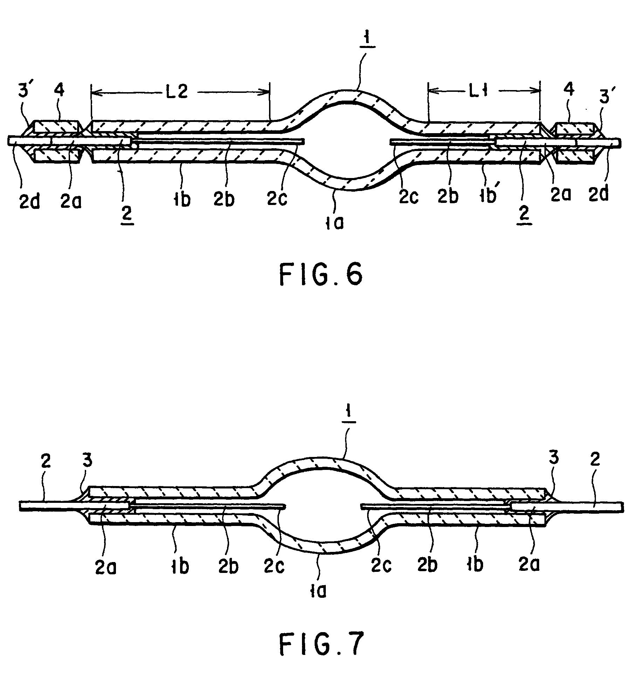

Step S112 makes the display 27 show a list of the diagnostic item numbers representing the selected diagnostic items. Fig. 6A shows an exemplary image displayed screen on the display 27 when all the diagnostic items have been selected. In other words, Fig. 6A shows all the diagnostic item numbers "01", "02", "03", ... listed up on the display 27. An indication (left side) of "00" is displayed on the display in the next step S113, and erased when the number of cycle times of the diagnoses or a total time of its execution is enough to finish the diagnostic item 5 of "Ne Diagnosis", as described later in detail. Such an indication is not limited by the number "00", but any alpha numerical letter such as "X" or any other symbol may be used instead of the number "00" as long as it can easily be distinguished from the other diagnostic item numbers.

In step S114, an identification bar code representing an individual and unique information of each vehicle is read by the bar-code reader 31 and temporarily stored in the RAM 22. The identification bar code may be previously printed on a diagnostic record that is provided for each individual vehicle. The bar code may be printed on a label or seal which is to be attached in place to the body of each vehicle instead of printing bar-code on the diagnostic record. Then the processing advances to the next diagnosis that is the "Vehicle Speed Sensor Diagnosis" shown in Fig. 8.

When the flag Fst is set to "0" in the step S108, i.e., when the step S108 determines that the operator has turned on the switch to provide power for the vehicle diagnostic apparatus 2, step S115 makes the display 27 show a menu that requests the operator to select the processing contents. Step S116 identifies the processing contents selected by the operator from the menu. When a "Vehicle Diagnosis" command is selected in step S116, the program advances to the step S109 and the diagnostic processing is started in the same manner as the case the flag Fst is set to "1". When a processing command other than the "Vehicle Diagnosis" command is selected in step S116, step S117 executes the selected other processing. Step S118 determines whether or not an "End" command is selected in the step S116. If the "End" command has been selected, the program executed is ended.

As previously described, the vehicle diagnostic apparatus 2 according to the present invention is designed to vary the operation after power input depending on which power-on procedure is used, the operation of the power switch or the cable connection. When the source power is supplied by the cable connection, the diagnostic processing is started immediately without showing the menu. This allows the operator to start the vehicle diagnostic program automatically in the inspection process, where vehicles to be diagnosed are carried on the production line one after another, by only connecting the cable 5 of the vehicle diagnostic apparatus 2 to each vehicle to be diagnosed, thus simplifying the diagnostic work. On the other hand, when the starting of the vehicle diagnostic apparatus 2 is done by the operator turning on the switch, the menu is displayed on the screen to facilitate the selection of any other processing.

Fig. 10 is a flowchart showing a method of the diagnostic item 1 "Vehicle Speed Sensor Diagnosis" to be executed by the step S200 of Fig. 8. The "Vehicle Speed Sensor Diagnosis" routine is to diagnose whether or not the sensor for detecting a vehicle speed VS is functioning normally, in which the vehicle speed VS detected by the vehicle speed sensor is compared with a reference value (reference vehicle speed VSref) to diagnose the vehicle speed sensor in a proper known manner in accordance with the comparison result.

Step S201 first determines whether or not the "Vehicle Speed Sensor Diagnosis" routine has been selected based on the value of a diagnostic selection flag Fselc 1 related to the "Vehicle Speed Sensor Diagnosis" routine. If Fselc 1 = 0, the "Vehicle Speed Sensor Diagnosis" is judged to be non-selected and the program advances to the next diagnosis. If Fselc 1 = 1, the "Vehicle Speed Sensor Diagnosis" is judged to be selected and the program advances to step S202.

The step S202 determines whether or not the "Vehicle Speed Sensor Diagnosis" has already been passed on the basis of the value of a pass flag Fpass 1 related to said diagnosis . The flag Fpass XX represents whether the diagnostic item XX has been passed or failed. If Fpass 1 = 1, the diagnostic item 1 is judged to have been passed and the program advances the next diagnosis item. If Fpass 1 = 0, the diagnostic item 1 is judged not to have been passed yet and the program advances to step S203.

Step S203 reads the reference vehicle speed VSref stored as one of standard data stored in the standard data storage area 73 (Fig. 5) of the ROM card 7, and step S204 detects a current vehicle speed VS through the ECU 1. Step S205 executes the vehicle speed sensor diagnostic routine based on the reference vehicle speed VSref and the detected vehicle speed VS. Step S206 determines whether or not the diagnosis executed in the step S205 is passed. If not passed, the program advances to the next diagnosis item (the "EGR Diagnosis" in the present embodiment) according to the flowchart shown in Fig. 8, and the "Vehicle Speed Sensor Diagnosis" routine is held off until the next diagnostic timing therefor.

If passed, on the other hand, step S207 sets the diagnosis pass flag Fpass 1 to "1". Step S208 erases the diagnostic item number "01" from the display 27. Fig. 6B shows an exemplary image displayed on the display 27 when only the "Vehicle Speed Sensor Diagnosis" has been passed, where only the diagnostic item number "01" has been erased.

Fig. 11 is a flowchart showing a method of the diagnostic item 2 "EGR Diagnosis" to be executed by the step S300 of Fig. 8. The "EGR Diagnosis" routine is to decide whether or not a device (EGR) to reduce NOx by recirculating exhaust gas into a combustion chamber of the engine normally functions. Such kind of diagnostic technique is well known in the related art.

As similar to the diagnostic processing mentioned above, steps S301 and S302 determine whether or not the diagnostic item 2 has been selected and the diagnosis has been passed based on the values of the diagnostic selection flag Fselc 2 and the diagnostic pass flag Fpass 2 related to the "EGR Diagnosis". If the "EGR Diagnosis" is selected (Fselc 2 = 1) but not yet be passed (Fpass 2 = 0), step S303 executes the "EGR Diagnosis" routine in a proper known manner. If step S304 judges the diagnosis to be passed, step S305 sets the diagnostic pass flag Fpass 2 to "1", and step S306 erases the diagnostic item number "02" from the display 27. On the other hand, if not be passed yet, the program advances to the next diagnostic item (the "EVP Diagnosis" in this embodiment) along the flowchart of Fig. 8, and the "EGR Diagnosis" routine is held off until the next diagnostic timing therefor.

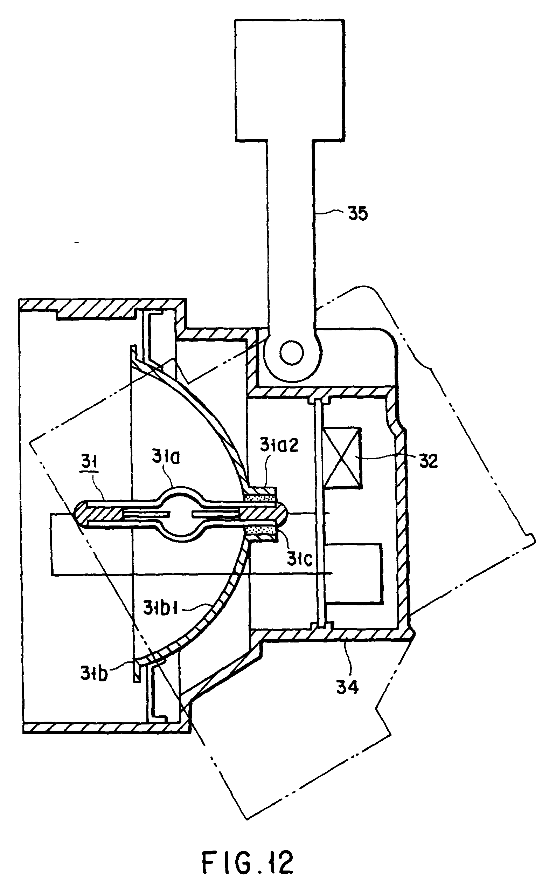

Fig. 12 is a flowchart showing method of "EVP Diagnosis" executed by the step S400 which uses forced activation signal. Fig. 7 is a functional block diagram for carrying out each vehicle diagnosis according to the present invention, in which like numbers represent identical or equivalent functional blocks, and step numbers given in each block correspond to those given in flowcharts, indicating the contents of processing to be executed by each block.

In Fig. 7, diagnostic-item selection means 551 selects a diagnostic item out of plural diagnostic items consecutively one by one for given cycles based on the diagnostic item management table 71 and the vehicle diagnostic program 72 each registered in the ROM card 7. Forced activation signal supplying means 550 supplies a forced activation signal Sx through the ECU 1 to a diagnostic target part 101 related to any one of diagnostic items ("EVP Diagnosis" or "Variable VT Diagnosis" in this embodiment) requiring a forced activation signal for execution of the diagnosis in the diagnostic items selected by the diagnostic item selection means 551. Vehicle-State detection means 552 detects through the vehicle-mounted ECU 1 a current state of each diagnostic target part 101 related to each diagnostic item selected by the diagnostic-item selection means 551.

Diagnostic means 553 compares the current state of the diagnostic target part 101 detected by the vehicle-state detection means 552 with a state predicted when the forced activation signal Sx is given, and judges the diagnostic target part 101 to be good when both states accord or an expected relation is established therebetween. The judgment result is displayed on the display 27.

When the forced activation signal Sx is supplied from the forced activation signal supplying means 550 to each related part of the vehicle through the ECU 1, self diagnosis stopping means 554 refers to, for example, a data table to recognize an item, the diagnostic result of which may vary under the influence of the forced activation signal Sx currently output, so as to instruct the self-diagnostic function part 9 to stop the self diagnosis related to the corresponding item. Thus, the self-diagnostic function part 9 stops the self diagnosis related to the item.

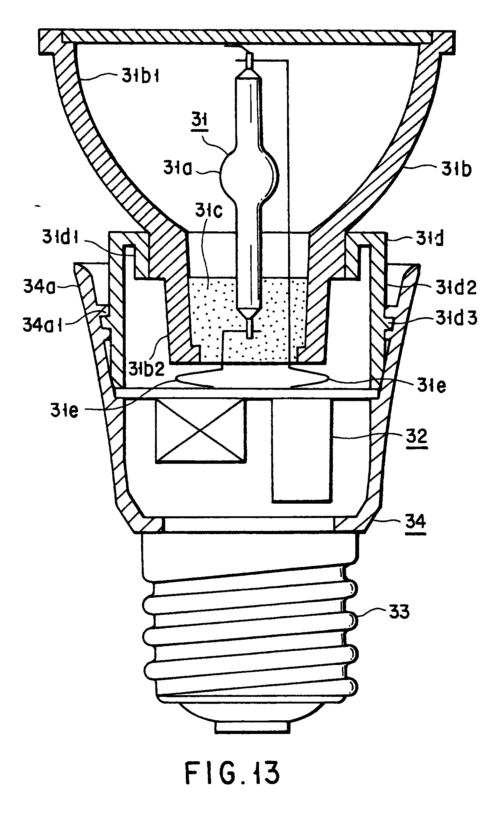

Referring now to the flowchart of Fig. 12 and the functional block diagram of Fig. 7, description will be made to a method of "EVP Diagnosis" related to the diagnostic item 3 according to the present invention. The "EVP Diagnosis" routine is to diagnose an evaporation system, as schematically illustrated in Fig. 13, for supplying the engine through a inspire pipe 87, when required conditions are satisfied during running of the vehicle, with fuel gas evaporated from fuel in a fuel tank 81 and collected in a canister 86.

In such an evaporation system, since the ECU 1 controls opening and closing of valves 83, 84 and 85, it is necessary to diagnose in the "EVP Diagnosis" routine whether or not each valve functions normally. The inspection process under limited conditions, however, makes it difficult to run the vehicle in such a manner that each valve in the evaporation system is normally actuated. In this regard, the embodiment is to send the forced activation signal from the ECU 1 to each valve such that each valve is forcibly opened or closed irrespective of the actual vehicle-running conditions. Then, pressure detected by a pressure sensor (PS) 82 is compared with pressure expected when each valve is opened or closed in accordance with the instruction of the forced activation signal. If both pressures accord, or an expected relation is established therebetween, each valve is diagnosed as being normal.

When the diagnostic-item selection means 551 selects the "EVP Diagnosis" of the step S400, it is judged in step S401 whether or not the diagnostic item is selected and said item has been judged to be passed, as is similar to the above, based on the values of the selection flag Fselc 3 and the pass flag Fpass 3 related to the diagnostic item 3. If the "EVP Diagnosis" is selected but has not passed yet, the processing advances to step S402, or otherwise, the operation advances to the next diagnostic processing. In step S402, a diagnosis stop flag Fstop 3 is referred to, and if the flag is set, the operation advances to the next diagnostic processing. If not set, the processing advances to step S403. The diagnosis stop flag Fstop 3 is set when the "EVP Diagnosis" has not passed after a predetermined number of executions or more has been done. Once the diagnosis stop flag Fstop 3 is set, the "EVP Diagnosis" is eliminated from the diagnostic targets.

In step S403, it is determined whether or not another forced activation signal for another diagnosis has already been sent from the ECU 1 to another diagnostic target part 101. Said another forced activation signal to be judged here is a forced activation signal supplied to a solenoid valve in the "Variable VT Diagnosis" routine in the present embodiment. If the determination at step S403 is negative, it is determined in step S404 whether or not the forced activation signal Sx for the "EVP Diagnosis" has already been sent out.

If the determination is negative, the self diagnosis stopping means 554 instructs the self-diagnostic function part 9 to temporarily stop the self diagnosis in step S405. Such instruction may be directed to the self-diagnostic function part 9 either to stop all the self diagnoses or to stop only the item the diagnostic result of which can vary under the influence of the forced activation signal Sx supplied for the "EVP Diagnosis".

In step S406, the forced activation signal supplying means 550 of Fig. 7 outputs an instruction to the ECU 1 in the "EVP Diagnosis" routine to output such a forced activation signal Sx as to open or close each valve 83-85 constituting the system. Then, the ECU 1 outputs the forced activation signal Sx to each valve 83-85 in accordance with the instruction.

In step S407, the value detected by the pressure sensor PS (Fig. 13) is read by the vehicle-state detection means 552. In step S408, the diagnostic means 553 makes a diagnosis of each valve based on whether or not the detected pressure value matches with a pressure value predicted from the state of each valve opened or closed by the forced activation signal Sx. If not diagnosed as being good, the counter 556 for counting the number of times the diagnosis is executed is incremented in step S413. Then, in step S414, it is determined whether or not the number of executions of the diagnosis exceeds a predetermined upper limit. If the determination is negative, the operation advances to the next diagnostic item (the "Variable VT Diagnosis" in this embodiment) along the flowchart of Fig. 8, and the "EVP Diagnosis" routine is held until the next diagnostic timing.

In future EVP diagnosis routines, once the diagnostic result at step S408 becomes good, "1" is set in the diagnostic pass flag Fpass 3 in step S409, and the diagnostic item number "03" is erased from the display 27 in step S410.

In step S411, the forced activation signal supplying means 550 stops supplying the forced activation signal Sx to the diagnostic target part 101. Then, in step S412, the self diagnosis stopping means 554 releases the self-diagnosis stopping instruction sent to the self-diagnostic function part 9 of the ECU 1 so that self-diagnostic function part 9 will restart the self diagnosis.

The counter 556 for counting the number of times the diagnosis is executed is incremented in step S413, each time the diagnosis at step S408 does not show a good result in the subsequent EVP diagnosis routines. Then, when it is determined in step S414 that the counter value exceeds the upper limit, the diagnosis stop flag Fstop 3 is set in step S415 to prevent the diagnosis from hindering other diagnosis routines using other forced activation signals. In step S416, the ECU1 stops supplying the forced activation signal Sx for actuating the diagnostic target part 101.

Then, in step S417, the self diagnosis stopping means 554 releases the self-diagnosis stopping instruction having been sent to the self-diagnostic function part 9 of the ECU 1 so that self-diagnostic function part 9 will restart the self diagnosis.

According to the embodiment, when supplying a forced activation signal to the vehicle, the external diagnostic apparatus 2 instructs the vehicle-mounted self-diagnostic function part 9 to stop the self diagnosis related to the item the diagnostic result of which can vary under the influence of the forced activation signal. This makes it possible to prevent the self-diagnostic function from wrongly diagnosing a relating diagnostic part even when the part shows a state different from a normal state under the influence of the forced activation signal.

Fig. 14 is a flowchart showing a method of "Variable VT Diagnosis" executed by the step S500. As is similar to the "EVP Diagnosis," this diagnosis is executed using a forced activation signal. The "Variable VT Diagnosis" routine is to diagnose a function for switching the valve opening and closing timing or the amount of valve lift to either of high-speed and low-speed operations according to eighteenth invention, has its characteristics, such as luminous efficiency and life time, determined almost primarily by the total weight of the lamp and the effective power supplied, i.e., the rated lamp power. This finding can not been anticipated at all in the conventional lamps which have a relatively large size and a relatively large lamp power.

It is on the basis of this finding that the nineteenth invention described above has been made.

The twentieth high-voltage discharge lamp according to the present invention is of the same type as the nineteenth high-voltage discharge lamp and is characterized in that the ratio $R_E$ of the total weight (g) of the translucent ceramic discharge vessel to the rated lamp power (W) satisfies the following formula:

$$0.6 \times 10^{-2} \leq R_E \leq 1.8 \times 10^{-2}$$

In the twentieth invention, a range more desirable than that specified in the nineteenth invention is defined.

The twenty-first high-voltage discharge lamp according to the invention is characterized by comprising: a translucent ceramic discharge vessel comprising a bulging section surrounding a discharge space and having an inner diameter $r_l$ (mm), a first small-diameter cylindrical section communicating with one end of the bulging section and having a length L1, and a second small-diameter cylindrical section communicating with the other end of the bulging section and having a length L2 (mm); power-supplying conductors, each comprising a seal part and a halide-resistant part having a proximal end connected to the distal end of the seal part and each inserted in one small-diameter cylindrical section of the translucent ceramic discharge vessel, the halide-resistant part penetrating, forming a narrow gap between the halide-resistant part and the inner surface of the small-diameter cylindrical section; a pair of electrodes, each arranged at the distal end of one halide-resistant part and located in the bulging section of the translucent ceramic discharge vessel; seals made of ceramic-sealing compound, each sealing a junction between one small-diameter cylindrical section of the translucent ceramic discharge vessel and the seal part of one power-supplying conductor; and a discharge medium containing a metal halide and filled in the translucent ceramic discharge vessel, and is characterized in that the inner diameter $r_l$ of the bulging section and the lengths L1 and L2 of the first and second small-diameter cylindrical sections satisfy the following formula:

$$r_1/^2 < L1 < L2$$

If a small, high-voltage discharge lamp, wherein two small-diameter cylindrical sections formed integral with and protruding from the ends of the bulging section of the translucent ceramic discharge vessel have the same length, is incorporated in a reflecting mirror and positioned coaxial therewith, one of the small-diameter cylindrical section will have a part protruding from the open end of the reflecting mirror. If so, the protruding part of the small-diameter cylindrical section is in the path of the light reflected from the reflecting mirror. This disturbs the distribution of light, and a shadow will appear in its center part.

If a high-voltage discharge lamp having small-diameter cylindrical sections of the same length is positioned vertically and turned on, the temperature of the small-diameter cylindrical section located above the other will rise much, and the seal will be corroded, giving rise to leak.

In the twenty-first invention, the small-diameter cylindrical sections have different lengths, and the shorter one has a length larger than the maximum diameter of the bulging section. Good sealing can therefore be achieved at the time of manufacturing the lamp.

When the lamp is incorporated into a reflecting mirror and positioned coaxial therewith, the short small-diameter cylindrical section may be arranged in the open end of the reflecting mirror, and the long small-diameter cylindrical may be arranged in the apical end of the reflecting mirror. In this case, the small-diameter cylindrical sections serve to fix the high-voltage discharge lamp in place, and the short small-diameter cylindrical section would not protrude from the open end of the bulging section.

If the high-voltage discharge lamp is positioned vertically and turned on, the long small-diameter cylindrical section may be positioned above the short one. In this case, the temperature of the seal rises but a little, thus inhibiting the occurrence of a leak.

The twenty-second high-voltage discharge lamp according to the invention is characterized by comprising: a translucent ceramic discharge vessel comprising a bulging section surrounding a discharge space and small-diameter cylindrical sections communicating with the ends of the bulging section; power-supplying conductors, each comprising a seal part and a halide-resistant part having a proximal end connected to the distal end of the seal part and each inserted in one small-diameter cylindrical section of the translucent ceramic discharge vessel, the halide-resistant part penetrating, forming a narrow gap of 0.21 mm or more between the halide-resistant part and the inner surface of the small-diameter cylindrical section; a pair of electrodes, each arranged at the distal end of one halide-resistant part and located in the bulging section of the translucent ceramic discharge vessel; seals made of ceramic-sealing compound, each sealing a junction between one small-diameter cylindrical section of the translucent ceramic discharge vessel and the seal part of one power-supplying conductor; and a discharge medium containing a metal halide and filled in the translucent ceramic discharge vessel.

There is a demand for a smaller high-voltage discharge lamp having a lamp power of 20W or less, which has a long lifetime and a high luminous efficiency.

The research the inventor hereof has conducted shows that such a smaller high-voltage discharge lamp cannot excellent characteristics by reducing the sizes of components of the conventional technology. Namely, the coldest part must be maintained at an appropriate temperature in order to achieve a sufficient luminous efficiency for a lamp of a small power. For this purpose it is essentially necessary to decrease the thermal capacity of the entire translucent ceramic discharge vessel. If the shape of the discharge vessel and the electrodes of a lamp of a relatively large power are reduced in size proportionally, a leak will occur at the seals within a short time after the lamp has been turned on. This is because the various modes of conveying heat to each seal from a heat source such as discharge plasma, i.e., heat conduction, convection and radiation, are unbalanced.

In the twenty-second invention, the narrow gap is set at a relatively large value. To this end the halide-resistant part of each electrode is made relatively thin, thereby increasing the heat resistance of the halide-resistant part. As a result, the heat conveyance from discharge plasma or the electrodes to the seals diminishes, successfully lowering the temperature of the seals. Therefore, a leak will hardly take place at each seal.

Better sealing can be accomplished if $Ln/L \geq 0.31$, where L is the length of each seal part and Ln is the depth to which the seal part is inserted into the small-diameter cylindrical section.

The halide-resistant parts may have a length of 4.5 mm or more. In this case, it is easy to maintain the seals and the coldest part at desired temperatures.

The twenty-third high-voltage discharge lamp according to the invention is characterized by comprising: a translucent ceramic discharge vessel comprising a bulging section surrounding a discharge space and small-diameter cylindrical sections communicating with the ends of the bulging section; power-supplying conductors, each comprising a seal part and a-halide-resistant part having a proximal end connected to the distal end of the seal part and each inserted in one small-diameter cylindrical section of the translucent ceramic discharge vessel, the halide-resistant part penetrating, forming a narrow gap between the halide-resistant part and the inner surface of the small-diameter cylindrical section; a pair of electrodes, each arranged at the distal end of one halide-resistant part and located in the bulging section of the translucent ceramic discharge vessel; seals made of ceramic-sealing compound, each sealing a junction between one small-diameter cylindrical section of the translucent ceramic discharge vessel and the seal part of one power-supplying conductor; and a discharge medium containing a metal halide and filled in the translucent ceramic discharge vessel, and is characterized in that a ratio $R_T$ of the wall thickness of each small-diameter cylindrical section of the translucent ceramic discharge vessel to the diameter of the seal part of each power-supplying conductor is 0.98 or less.

In the twenty-third invention, the wall thickness of each small-diameter cylindrical section of the translucent ceramic discharge vessel is set within a prescribed range, thereby decreasing the probability that cracks develop during the manufacture or use of the high-voltage discharge lamp.

If the ratio $R_T$ exceeds 0.98, the temperature will greatly change in both the thickness direction of the translucent ceramic discharge vessel and the axial direction thereof, and cracks will likely develop.

The twenty-fourth high-voltage discharge lamp according to this invention is of the same type as the twenty-third high-voltage discharge lamp. It is characterized in that the ratio $R_T$ of the wall thickness of each small-diameter cylindrical section of the translucent ceramic discharge vessel to the diameter of the seal part of each power-supplying conductor is 0.90 or less.

In the twenty-fourth invention, a range more desirable than that specified in the twenty-third invention is defined.

The twenty-fifth high-voltage discharge lamp according to the invention is characterized by comprising: a translucent ceramic discharge vessel comprising a bulging section surrounding a discharge space and small-diameter cylindrical sections communicating with the ends of the bulging section; power-supplying conductors, each comprising a seal part and a halide-resistant part having a proximal end connected to the distal end of the seal part and each inserted in one small-diameter cylindrical section of the translucent ceramic discharge vessel, the halide-resistant part penetrating, forming a narrow gap between the halide-resistant part and the inner surface of the small-diameter cylindrical section; a pair of electrodes, each arranged at the distal end of one halide-resistant part and located in the bulging section of the translucent ceramic discharge vessel; seals made of ceramic-sealing compound, each sealing a junction between one small-diameter cylindrical section of the translucent ceramic discharge vessel and the seal part of one power-supplying conductor and covering a distal portion of the seal part over a distance of 0.2 to 3 mm; and a discharge medium containing a metal halide and filled in the translucent ceramic discharge vessel.

To secure the seal part of each power-supplying conductor to one small-diameter cylindrical section by applying ceramic-sealing compound and heating and melting the compound, it is necessary to cover the entire seal part inserted in the small-diameter cylindrical section with a seal, thereby to prevent a halide from corroding the seal part. If the proximal portion, too, is covered with the compound, however, the seal part will likely be corroded. Nonetheless, the seal part may be corroded while the lamp is on, if the compound covers the seal part over a distance of less than 0.2 mm. If the compound covers the seal part over a distance of more than 3 mm, crack will likely to develop.

The twenty-sixth high-voltage discharge lamp according to the present invention is of the same type as the first high-voltage discharge lamp and the fourth to twenty-fifth high-voltage discharge lamps. It is characterized in that the translucent ceramic discharge vessel has an internal volume of 0.1 cc or less.

The twenty-sixth invention is effective, particularly for a small, high-voltage discharge lamp having a translucent ceramic discharge vessel, which has an internal volume of 0.1 cc or less.

If the translucent ceramic discharge vessel has an internal volume of 0.1 cc or less, it is recommended that the vessel have a wall thickness of 1.5 mm or less.

It is also desired that the inter-electrode distance be 5 mm or less.

Further, it is desired that the input power of the high-voltage discharge lamp according to the twenty-sixth invention be 35W or less.

The twenty-seventh high-voltage discharge lamp according to the invention is of the same type as the first high-voltage discharge lamp and the fourth to twenty-sixth high-voltage discharge lamps. It is characterized in that the translucent ceramic discharge vessel has an internal volume of 0.05 cc or less.

In the twenty-seventh invention, a more desirable range of the internal volume of the translucent ceramic discharge vessel is defined. The optimal value is 0.04 cc or more.

The twenty-eighth high-voltage discharge lamp according to this invention is of the same type as the high-voltage discharge lamp according to any one of the first to twenty-seventh inventions. It is characterized in that the translucent ceramic discharge vessel is made of YAG or yttrium oxide.

YAG and yttrium oxide are materials which are transparent, which have high average linear transmittance and which can be molded in any desired shape. They are excellent materials for translucent ceramic discharge vessels for use in smaller, high-voltage discharge lamps.

If these materials are used to make translucent ceramic discharge vessels, it will be possible to make a vessel comprising a bulging section and small-diameter sections, which are made integral and which define a continuous curved surface. In addition, the vessel will have a uniform wall thickness. The vessel can therefore serve to provide a high-voltage discharge lamp, which exhibits high optical efficiency when connected to an optically ideal point light source, which is thermally uniform, hardly to have cracks, and which has a long lifetime.

A high-voltage discharge lamp device according to the present invention is characterized by comprising: a high-voltage discharge lamp according to any one of the first to twenty-eighth inventions described above; and a reflecting mirror formed integral with the high-voltage discharge lamp and supporting the lamp, locating the luminescent center of the lamp almost at the focal point.

In the apparatus, the high-voltage discharge lamp is permanently secured to the reflecting mirror and thereby supported. This is desirable because the optical position relation between the lamp and the mirror would not alter. Nonetheless, the lamp may be removably connected to the mirror, if necessary.

The high-voltage discharge lamp and the reflecting mirror may be set in axial alignment, or the axis of the high-voltage discharge lamp may intersect at right angles with the optical axis of the reflecting mirror.

The high-voltage discharge lamp device of this invention may be removably attached to the main body of a lighting fixture, thereby providing a lighting apparatus for use in video photography. Alternatively, the high-voltage discharge lamp device may be used as a light source for optical fibers. Still alternatively, the apparatus can be used in various kinds of lighting means.

The first lighting apparatus according to the present invention is characterized by comprising: a high-voltage discharge lamp device according to this invention; a discharge-lamp lighting device arranged at the back of the reflecting mirror; and power-receiving means connected to the discharge lamp lighting device.

The discharge-lamp lighting device should better comprise a high-frequency lighting circuit having an inverter and current-limiting means, because these components help to reduce the size and weight of the device. In necessary, however, a low-frequency direct current may be supplied to the high-voltage discharge lamp through the current-limiting means. If this is the case, the current-limiting means can be an inductor, a resistor, or a capacitor.

The discharge-lamp lighting device may be fixed to the back of the high-voltage discharge lamp device, or may be removably attached to the back of the discharge lamp apparatus.

Furthermore, the discharge-lamp lighting device may be placed in a proper case, thereby providing a unit that has good outer appearance, that is easy to handle and that is safe.

The power-receiving means is designed to receive power from a power supply and supply the power to the discharge-lamp lighting device. The power-receiving means can he selected various types, such as one having a conductor wire connected to the power supply or one having a known-type tip to be attached to the lamp socket.

If the power-receiving mans is the type mentioned last, it can light the high-voltage discharge lamp in the same way as an incandescent lamp, when attached to a lamp socket for an ordinary incandescent lamp.

Bulb-shaped fluorescent lamps have come to be used in the same way as mentioned above. However, they cannot be used for such lighting purposes as would require directivity.

By contrast, it is possible with the present invention to achieve directional distribution of light as is desired, by means of the reflecting mirror. This is because the light-emitting section is virtually an ideal point light source.

It is feared that heat is generated and the temperature rises when the high-voltage discharge lamp is turned on. Nonetheless, the reflecting mirror decreases the heat radiation to the discharge-lamp lighting device. Thus, the discharge-lamp lighting device can be one designed for use in bulb-shaped fluorescent lamps.

Further, the reflecting mirror can reflect the heat emitted from the high-voltage discharge lamp, applying the heat back to the high-voltage discharge lamp. Heat loss can therefore be reduced, thereby enhancing the luminous efficiency.

Furthermore, the power-receiving means can be attached to the case of the discharge-lamp lighting device. If so, the lighting apparatus can be integral as a whole, becoming still easier to handle.

The second lighting apparatus according to this invention is of the same type as the first lighting apparatus and is characterized in that the high-voltage discharge lamp device and the discharge-lamp lighting device can be disconnected from each other.

Having this structure, the second lighting apparatus may comprise components common to other types of lamps.

More specifically, the discharge-lamp lighting device can be used not only for high-voltage discharge lamp device of this invention, but also for bulb-shaped fluorescent lamp devices. Moreover, the discharge-lamp lighting device can be used for various kinds of high-voltage discharge lamp devices that differ in light-distribution characteristic.

Thus, it is easy for manufacturers to accomplish component management and, hence, to lower the manufacturing cost of the lighting apparatus. If either the high-voltage discharge lamp device or the discharge-lamp lighting device fails to operate or comes to the end of its life, it can be replaced by a new one, while the other, which is flawless, is kept in use. Further, a high-voltage discharge lamp device having any desired light-distribution characteristic can be selected for a specific use. Still further, either a bulb-shaped fluorescent lamp device or a high-voltage discharge lamp device can be selected and used.

The third lighting apparatus according to this invention is characterized by comprising: a main body; and one of the first to twenty-eighth high-voltage discharge lamps described above.

The third lighting apparatus is based on the concept that the light emitted by a high-voltage discharge lamp is used for any purpose. It may be applied to a lighting fixture, a head light for vehicles, a light source for optical fibers, an image projector, an opto-chemistry apparatus, a fingerprint-identifying apparatus, and the like.

The main body is that part of the lighting apparatus, which is other than the high-voltage discharge lamp.

Brief Description of Drawings

FIG. 1 is a sectional view showing the first high-voltage discharge lamp embodying the present invention;

FIG. 2 is an enlarged, sectional view of the main part of the ellipsoidal, translucent ceramic discharge vessel of the high-voltage discharge lamp of the invention, explaining the standard for measuring the minor and major axes of the vessel;

FIG. 3 is a sectional view showing the second high-voltage discharge lamp embodying the present invention;

FIG. 4 is a graph showing the temperatures which the translucent ceramic discharge vessels of various high-voltage discharge lamps have at their coldest parts and surfaces as the outer-diameter ratio $d_B/d_T$ is changed, said high-voltage discharge lamps being similar to the high-voltage discharge lamp according to the second embodiment shown in FIG. 3 and being ones each contained in an outer bulb;

FIG. 5 is a graph showing the temperatures which the translucent ceramic discharge vessels of various high-voltage discharge lamps have at their coldest parts and surfaces as the length ratio $L_T/L_B$ is changed, said high-voltage discharge lamps being similar to the high-voltage discharge lamp according to the second embodiment shown in FIG. 4 and being ones each contained in an outer bulb;

FIG. 6 is a sectional view showing the third high-voltage discharge lamp embodying the present invention;

FIG. 7 is a sectional view showing the fourth high-voltage discharge lamp embodying the this invention;

FIG. 8 is a front view showing the fifth high-voltage discharge lamp embodying the invention;

FIG. 9 is a front view showing the sixth high-voltage discharge lamp embodying the present invention;.

FIG. 10 is a perspective view of a head light for automobiles, which is the first lighting apparatus embodying this invention;

FIG. 11 is a sectional view showing the second lighting apparatus embodying the present invention;

FIG. 12 is a sectional view showing the third lighting apparatus embodying the present invention;

FIG. 13 is a sectional view showing the fourth lighting apparatus embodying the invention;

FIG. 14 is a sectional front view showing the fifth lighting apparatus embodying the present invention;

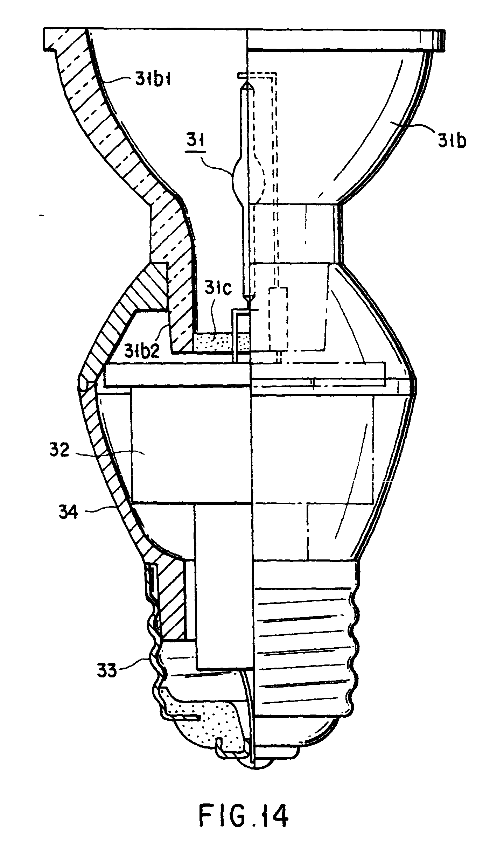

FIG. 15 is an exploded, partially sectional front view showing the sixth lighting apparatus embodying the invention;

FIG. 16 is a partially sectional front view of the apparatus, with the components assembled together; and

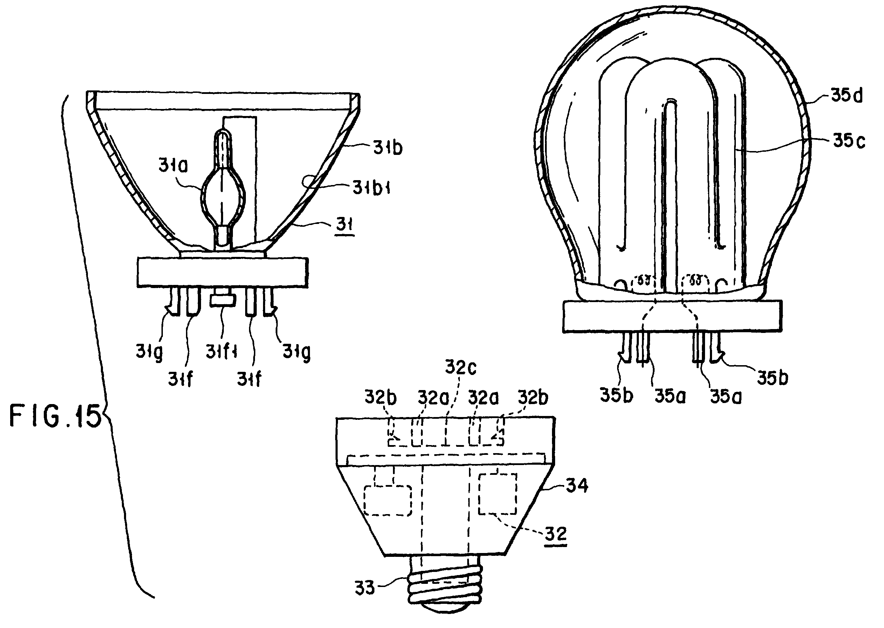

FIG. 17 is a circuit diagram showing the seventh lighting apparatus embodying the present invention.

Best Mode of Carrying Out the Invention

FIG. 1 is a sectional view showing the first high-voltage discharge lamp embodying this invention.

In the figure, numeral 1 denotes a translucent ceramic discharge vessel, numeral 2 designates electrode-integrated power-supplying conductors, and numeral 3 indicates seals.

The translucent ceramic discharge vessel 1 comprises a bulging section 1a and small-diameter cylindrical sections 1b.

The bulging section 1a is a hollow, almost ellipsoidal cylinder. The ends of the section 1a are drawn, each given a continuous curved surface.

The small-diameter cylindrical sections 1b are connected to the bulging section 1a, and each has a curved surface continuous to the curved surface of one end of the bulging section 1a. The bulging section 1a and the sections 1b constitute the translucent ceramic discharge vessel 2.

FIG. 2 is an enlarged, sectional view of the main part of the ellipsoidal, translucent ceramic discharge vessel of the high-voltage discharge lamp of the invention, and explains the standard for measuring the minor and major axes of the vessel.

As shown in this figure, the minor diameter $r_S$ is the maximum inner diameter of the bulging section 1a. The major diameter $r_L$ is the distance between points P1 and P2 at which lines $s_1$ and $s_2$ intersect with the major axis c, respectively. Each of the lines $s_1$ and $s_2$ extends from one end of the minor diameter and is tangent to the inner surface of the junction between the bulging section 1a and one cylindrical section 1b. The length of each small-diameter cylindrical section 1b is the distance between the end of the major diameter $r_L$, i.e., point P1 or point P2, and the end of the small-diameter cylindrical section 1b.

Referring to FIG. 1 again, the lamp will be described further.

Each of the electrode-integrated power-supplying conductors comprises a seal part 2a, a halide-resistant part 2b, and a electrode part 2c.

The seal part 2a seals the translucent ceramic discharge vessel 1, at the junction between one power-supplying conductor 2 and one small-diameter cylindrical section 1b.

The halide-resistant part 2b is welded at its proximal end to the seal part 2a. The distal portion of the halide-resistant part 2b projects into the bulging section 1a. A narrow gap is provided between the halide-resistant part 2b and the inner surface of the small-diameter cylindrical section 1b.

The electrode part 2c is that portion of the halide-resistant part 2b which projects into the bulging section 1a.

Each seal 3 is interposed between one small-diameter section 1b and one seal part 2b, sealing the translucent ceramic discharge vessel 1 in airtight fashion and holding one electrode-integrated power-supplying conductor 2 at a prescribed position. To form the seal 3, ceramic-sealing compound is applied to the seal part 2a of the electrode-integrated power-supplying conductor 2, at the end of the small-diameter section 1b, and is heated and melted. The melted compound flows into the gap between the seal part 2a and the inner surface of the small-diameter cylindrical section 1, thus covering not only the seal part inserted in the small-diameter cylindrical section 1b but also the proximal portion of the halide-resistant part 2b.

The translucent ceramic discharge vessel 1 contains a discharge medium containing halide of light-emitting metal and rare gas.

Example 1

It is a high-voltage discharge lamp of the type shown in FIG. 1, which has the following specification.

Translucent ceramic discharge vessel: made of YAG, having an overall length of 24 mm, and comprising a bulging section 1a having a major diameter of 6.5 mm, minor diameter of 3.5 mm, a wall thickness of 0.5 mm, and small-diameter sections each having an inner diameter of 0.75 mm, an outer diameter of 1.7 mm, and a length of 8 mm.

Electrode-integrated power-supplying conductors: each comprising a seal part 2a, or a niobium rod having an outer diameter of 0.65 mm and a halide-resistant part (and electrode) 2b, or tungsten rod having an outer diameter of 0.25 mm and a length of 6 mm. The narrow gap provided between the halide-resistant part 2b and the inner surface of one small-diameter cylindrical section 1b is 0.25 mm.

The proximal portion of each halide-resistant part, covered with the seal 3, extended for a distance of 0.5 mm.

Discharge medium: 0.6 mg of NaI, 0.6 mg of TlI, 0.4 mg of InI, 2 mg of mercury, and about 13300 Pa of argon were sealed in the vessel.

The high-voltage discharge lamp, thus obtained, weighed 0.42g. Its rated lamp power was 25W. Hence, the ratio $R_L$ of the total weight (g) to the rated lamp power (W) was $1.7 \times 10^{-2}$ g/W.

The translucent ceramic discharge vessel 1 weighted 0.31g. The ratio $R_E$ of the weight of the translucent ceramic discharge vessel 1 to the rated lamp power was therefore $1.2 \times 10^{-2}$ g/W.

The luminous efficiency wad 67l m/W, and the color temperature was 3200K.

Example 2

This is a high-voltage discharge lamp of the type shown in FIG. 1, which has the following specification.

Translucent ceramic discharge vessel: made of aluminum oxide, having an overall length of 24 mm, and comprising a bulging section 1a having a major diameter of 5.0 mm, minor diameter of 3.5 mm, a wall thickness of 0.5 mm, and small-diameter sections each having an inner diameter of 0.70 mm, an outer diameter of 1.7 mm, and a length of 9.5 mm.

Electrode-integrated power-supplying conductors: each comprising a seal part 2a, or a niobium rod having an outer diameter of 0.64 mm and an overall length of 10 mm, and a halide-resistant part (and electrode) 2b, or tungsten rod having an outer diameter of 0.25 mm and a length of 7.5 mm. The narrow gap provided between the halide-resistant part 2b and the inner surface of one small-diameter cylindrical section 1b is 0.25 mm. Each seal part 2a is inserted into the small-diameter cylindrical section 1b for a distance of 3.5 mm from the end thereof.

The proximal portion of each halide-resistant part, covered with the seal 3, extended for a distance of 1 mm.

Discharge medium: 1.5 mg of NaI, 0.8 mg of TlI, 1.2 mg of InI, 1.5 mg of mercury, and about 13300 Pa of argon were sealed in the vessel.

The rated lamp power was 20W. The temperature of the coldest part was 780°C, and the temperature of the seals was 650°C. The luminous efficiency was 68 lm/w.

FIG. 3 is a sectional view showing the second high-voltage discharge lamp embodying the present invention.

In the figure, the components identical to those shown in FIG. 1 are designated at the same reference numerals. These component will not be explained.

This embodiment differs in that the bulging section of the translucent ceramic discharge vessel 1 is almost spherical.

Example 3

This is a high-voltage discharge lamp of the type shown in FIG. 2, which has the following specification.

Translucent ceramic discharge vessel: made of aluminum oxide, having an overall length of 39 mm and an internal volume of 0.08 cc, and comprising a bulging section 1a having a maximum outer diameter d1 of 6.5 mm and a length L1 of 9 mm, and small-diameter sections each having an outer diameter d2 of 2.5 mm, an inner diameter of 1.5 mm and a length L2 of 15 mm.

Electrode-integrated power-supplying conductors: each comprising a seal part 2a of a niobium rod having an outer diameter of 2 mm and an overall length of 8 mm, and a halide-resistant part (and electrode) 2b of tungsten rod having an outer diameter of 1.7 mm and a length of 14 mm. The narrow gap provided between the halide-resistant part 2b and the inner surface of one small-diameter cylindrical section 1b is 0.4 mm. Each seal part 2a is inserted into the small-diameter cylindrical section 1b for a distance of 5 mm from the end thereof.

The distal portion of each halide-resistant part 2b extends into the bulging section 1a, forming an electrode. The inter-electrode distance is 4 mm.

The seals 3 are high-melting type, made by adding $Dy_2O_3$, $Nd_2O_3$ or the like to $Al_2O_3$-$SiO_2$.

Discharge medium: 0.6 mg of NaI, 0.1 mg of TlI, 0.4 mg of $DyI_3$, 0.8 mg of mercury, and about 2500 kPa of xenon were sealed in the vessel.

FIG. 4 is a graph showing the temperatures which the translucent ceramic discharge vessels of various high-voltage discharge lamps have at their coldest parts and surfaces as the outer-diameter ratio $d_B/d_T$ is changed, said high-voltage discharge charge lamps being similar to the high-voltage discharge lamp according to the second embodiment shown in FIG. 3 and being ones each contained in an outer bulb.

The lamps were lighted at lamp power of 60W.

In the figure, the outer-diameter ratio $d_B/d_T$ is plotted on the abscissa axis, the temperature (°C) of the coldest part is plotted on the left ordinate axis, and the surface-temperature difference (°C/mm) is plotted on the right ordinate axis.

Curve A indicates the temperature of the coldest part of the translucent ceramic discharge vessel 1. Curve B represents the surface-temperature difference of the translucent ceramic discharge vessel 1.

As seen from curve A, the outer-diameter ratio $d_B/d_T$ should be 1 or more in order to maintain the temperature of the coldest part at 600°C or more.

As seen from curve B, it is desired that the outer-diameter ratio $d_B/d_T$ be 3.2 or less in order to set the surface-temperature difference of the translucent ceramic discharge vessel 1 at 35°C/mm or less so that cracks may hardly develop.

FIG. 5 is a graph showing the temperatures which the translucent ceramic discharge vessels of various high-voltage discharge lamps have at their coldest parts and surfaces as the length ratio $L_T/L_B$ is changed, said high-voltage discharge charge lamps being similar to the high-voltage discharge lamp according to the second embodiment shown in FIG. 3 and being ones each contained in an outer bulb.

In the figure, the length ratio $L_T/L_B$ is plotted on the abscissa axis, the temperature of each seal (°C) is plotted on the left ordinate axis, and the temperature (°C) of the coldest part is plotted on the right ordinate axis.

Curve C indicates the temperature of sealing part. Curve D indicates the temperature of the coldest part.

As seen from curve C, the length ratio $L_T/L_B$ should be 1.5 in order to maintain the seal part at 750°C or less, because 750°C is the highest temperature at which the seal can remain reliable.

As seen from curve D, it is desired that the length ratio $L_T/L_B$ be 4.3 or less in order to set the coldest part at 600°C or more as is required in practice.

The luminous efficiency and lifetime of the high-voltage discharge lamp according to this example are shown in Table 1, along with those of some conventional lamps.

Table 1

| | Luminous efficiency (lm/w) | Non-lighting time (h) | Outer-diameter time ($d_B/d_T$) | Length ratio ($L_T/L_B$) |
|---|---|---|---|---|
| Present invention | 72.5 | > 12000 | 2.6 | 1.67 |
| Conventional lamp 1 | 71.0 | 1250 (crack) | 5.2 | 1.67 |
| Conventional lamp 2 | 73.0 | 320 (leak) | 2.6 | 0.98 |
| Conventional lamp 3 | 51.2 | > 12000 | 0.75 | 1.67 |
| Conventional lamp 4 | 48.3 | > 12000 | 2.6 | 6.1 |

FIG. 6 is a sectional view showing the third high-voltage discharge lamp embodying the present invention.

The components identical to those shown in FIG. 1 are designated at the same reference numerals and will not be explained.

This example differs in that one small-diameter cylindrical section 1b' of the translucent ceramic discharge vessel 1 has a length L1 smaller than the length L2 of the other small-diameter cylindrical section 1b, and that it can be lighted in the atmosphere.

More specifically, a platinum rod 2d is welded to the proximal end of the seal part of each electrode-integrated power-supplying conductor 2. A ceramic sleeve 4 is mounted, surrounding the welded part of each rod 2d. A seal 3' made of ceramic-sealing compound covers the exposed portion of each seal part 2a.

Example 4

This is a high-voltage discharge lamp of the type shown in FIG. 6, which has the following specification.

Translucent ceramic discharge vessel: made of YAG and comprising a bulging section 1a and two small-diameter cylindrical sections 1b and 1b'. The bulging section 1a has a major diameter of 6.5 mm, a minor diameter of 5.0 mm, a wall thickness of 0.5 mm, and an average linear transmittance of 45% at its main part. The bulging section 1a has been mechanically polished to have its average linear transmittance enhanced.

The small-diameter cylindrical sections 1b and 1b' have an inner diameter of 0.70 mm and an outer diameter of 1.7 mm. The section 1b has a length L1 of 7.0 mm, while the section 1b' has a length L2 of 10 mm. Each small-diameter cylindrical section has an average linear transmittance of 10%.

The translucent ceramic discharge vessel 1 thus constructed has an overall length of 23.5 mm.

The average linear transmittance of the main part of the translucent ceramic discharge vessel 1 is an arithmetical mean of the values measured at five points on the part that extends between the electrodes. The average linear transmittance of each small-diameter cylindrical section is an arithmetical mean of the values measured at five points spaced apart in the axial direction.

Electrode-integrated power-supplying conductors: each comprising a seal part 2a of a niobium rod having an outer diameter of 0.64 mm, and a halide-resistant part (and electrode) 2b of tungsten rod having an outer diameter of 0.28 mm and a length of 6 mm. The inter-electrode distance is 2 mm. Each seal part 2a is inserted into the small-diameter cylindrical section 1b for a distance of 3.5 mm from the end thereof.

The proximal portion of each halide-resistant part, covered with the seal 3 was 1 mm long.

Discharge medium: 0.6 mg of NaI, 0.4 mg of TlI, 0.6 mg of InI, 0.4 mg of $DyI_3$, 1.5 mg of mercury, and about 13300 Pa of xenon were sealed in the vessel.

The rated lamp power is 20W.

The high-voltage discharge lamp of the example described above was incorporated into a reflecting mirror that has an aperture diameter of 35 mm and comprising an aluminum film formed by vapor deposition. The particulars of this lamp are shown in Table 2, along with those of some comparative examples.

Table 2

| | Average linear Transmittance (%) | | Relative efficiency (%) | | Failure Ratio (%) |
|---|---|---|---|---|---|
| Lamp tested | Bulging section | Cylindrical section | Luminous efficiency | Luminaire efficiency | |
| Example | 45 | 15 | 100 | 100 | 0 |
| Comparative example 1 | 45 | 45 | 91 | 99 | 25 |
| Comparative example 2 | 20 | 20 | 98 | 68 | 0 |

Comparative example 1 is of the same specification as the present example, except that the bulging section and the small-diameter cylindrical sections are polished and have an average linear transmittance of 45%.

Comparative example 2 is of the same specification as the present example, except that the small-diameter cylindrical sections are polished and have an average linear transmittance of 20%.

As seen from Table 2, the example has higher luminous efficiency, higher luminaire efficiency and lower-failure ratio than the comparative examples 1 and 2.

FIG. 7 is a sectional view showing the fourth high-voltage discharge lamp embodying this invention.

In the figure, the components identical to those shown in FIG. 1 are designated at the same reference numerals. These components will not be explained.

This high-voltage discharge lamp differs in that the bulging section 1a of the translucent ceramic discharge vessel 1 is shaped like an ellipsoid and that the inter-electrode distance is therefore relatively long.

FIG. 8 is a front view showing the fifth high-voltage discharge lamp embodying the invention.

The present embodiment differs from the first lamp in that it has a double-tube structure for use in a lighting apparatus such as a spotlight.

Numeral 5 indicates an outer glass tube, numeral 5 denotes a cap, and numeral 7 indicates a bead mount.

The glass tube 5 is made of quartz glass. It has a pinch seal section 5a at the proximal end, and an evacuation chip section 5b at the distal end. The outer glass tube has been evacuated through the evacuation chip section 5b, and a vacuum has been created in the outer glass tube 5.

The cap 6 is of type E11, sealing the pinch seal section 5a of the glass outer tube 5 with cap cement.

The bead mount 7 comprises a bead glass 7a, conductors 7b and 7c, a light-emitting tube 7d, a support wire 7e, lead-in metal foils 7f, and outer conductors (not shown).

The bead glass 7a electrically insulates the conductors 7b and 7c and holds them together.

The conductor 7b is connected at the distal end to that power-supplying conductor 3 of the light-emitting tube 7d, which is provided in the cap 6. The conductor 7c is connected at the distal end to the power-supplying conductor 3 provided in the evacuation chip section 5b.

The light-emitting tube 7d is the second high-voltage discharge lamp according to the invention, which is shown in FIG. 3.

The support wire 7e is an extension of the conductor 7c, which extends upwards from the power-supplying conductor 3 as is illustrated in the figure. The wire 7e has its proximal end connected to the power-supplying conductor 3 provided in the evacuation chip section 5b and its distal end embedded in the evacuation chip section 5b.

The lead-in metal foils 7f are made of molybdenum and embedded in the pinch seal section 5a of the outer glass tube 5. They are connected at one end to the proximal ends of the conductors 7a and 7c, respectively, and at the other end to the outer conductors, respectively.

Hence, the light-emitting tube 7d is suspended in the outer glass tube 5 at a prescribed position by the glass bead 7a, between the support wire 7e of the bead mount 7 and the proximal ends of the conductors 7b and 7c.

Since a vacuum is maintained in the outer glass tube 5, the light-emitting tube 7d has a gentle temperature gradient while the lamp is lighted. If the airtight vessel 1 of the light-emitting tube 7d may be made of ceramics, cracks are likely to develop when the temperature difference in the airtight vessel exceeds a predetermined value. Nonetheless, cracks will hardly develop, because a vacuum is maintained in the outer glass tube 5.

FIG. 9 is a front view showing the sixth high-voltage discharge lamp embodying the present invention;

This embodiment differs from the first lamp in that it has a double-tube structure for use in headlights of automobile.

Numeral 8 indicates a outer glass tube 8, numeral 9 denotes a light-emitting tube, numeral 10 represents internal lead-in wires, numeral 11 indicates sealing metal foils, numeral 12 denotes an outer lead-in wire, numeral 13 indicates a cap, and numeral 14 represents an insulating tube.

The outer glass tube 8 is sealed at both ends with pinch seal sections 8a. A vacuum has been created in the outer glass tube 8.

The light-emitting tube 9 has the same structure as the high-voltage discharge lamp shown in FIG. 3.

The internal lead-in wires 10 are connected at one end to the power-supplying conductors provided at the ends of the light-emitting tube 9, and at the other end to the sealing metal foils 11.

The sealing metal foils 11 are embedded in airtight fashion in the pinch seal sections 8a of the outer glass tube 8.

The outer lead-in wire 12 has one end connected to the sealing metal foil 11, an intermediate portion extending parallel to the outer glass tube 8, and the other end connected to the cap 13.

The insulating tube 14 secured to that part of the outer lead-in wire 12, which extends parallel to the outer glass tube 8.

FIG. 10 is a perspective view of a head light for automobiles, which is the first lighting apparatus embodying this invention.

In the figure, numeral 20 designates a headlight body and numeral 21 denotes a front cover.

The headlight body 20 is a molding made of synthetic resin. Its inner surface is a reflecting surface made by vapor-depositing aluminum.

The front cover 21 is a molding made of transparent synthetic resin. It is secured to the front of the headlight body 20. It has a light-controlling means such as a lens or a prism, as is needed.

A metal halide discharge lamp, which is identical in structure to the sixth high-voltage discharge lamp embodying the invention, shown in FIG. 9, is removably attached, from the back of the head-light body 20.

FIG. 11 is a sectional view showing the second lighting apparatus embodying the present invention;

In the figure, numeral 31 indicates a high-voltage discharge lamp apparatus, numeral 32 designates a discharge-lamp lighting device, numeral 33 represents a power-receiving means, and numeral 34 is a case.

The high-voltage discharge lamp apparatus 31 comprises a high-voltage discharge lamp 31a and a reflecting mirror 31b.

The high-voltage discharge lamp 31a is a high-voltage discharge lamp according to the present invention. The lamp shown in FIG. 6 is preferably used. In this case, it is desirable to arrange the lamp, with the long small-diameter cylindrical section opposing the apical end of the reflecting mirror 31b.

The reflecting mirror 31b has a reflecting surface 31b1 and an apex opening 31b2. The small-diameter cylindrical section of the high-voltage discharge lamp 31a is held, by applying inorganic adhesive 31c, in the apex opening 31b2 of the mirror 31b, with the bulging section located almost at the focal point of the reflecting mirror 31b.

The discharge-lamp lighting device 32 comprises a high-frequency inverter and a current-limiting means and is designed to light the high-voltage discharge lamp 31a. The discharge-lamp lighting device 32 is arranged at the back of the reflecting mirror 31b of the high-voltage discharge lamp device 31.

The power-receiving means 33 comprises a threaded cap. Once the threaded cap is fitted in the lamp socket (not shown), power is received to energize the discharge-lamp lighting device 32.

The case 34 contains the components described above and holds them in a predetermined positional relation.

FIG. 12 is a sectional view showing the third lighting apparatus embodying the present invention.

In the figure, the components identical to those shown in FIG. 11 are designated at the same reference numerals. The components will not be explained.

The present embodiment differs in the structure of the power-receiving means.

More precisely, the case 34 is suspended from a lighting duct or the like by a suspending means 35, whereby the lighting apparatus is used as a spotlight. The power-receiving means (not shown) is a conductor wire inserted in the suspending means 35.

FIG. 13 is a sectional view showing the fourth lighting apparatus embodying the invention.

In the figure, the components identical to those shown in FIG. 11 are designated at the same reference numerals. The components will not be explained.

The present embodiment differs in that the high-voltage discharge lamp device 31 and the discharge-lamp lighting device 32 can be assembled easily.

That is, the high-voltage discharge lamp device 31 is provided with a holding cylinder 31d and contact strips 31e, and the case 34 has a receiving port 34a.

The holding cylinder 31d comprises a reflecting-mirror holding section 31d1 and a fitted cylinder section 31d2.

The reflecting-mirror holding section 31d1 holds the reflecting mirror 31b with adhesive or the like applied in the apex opening 31b2 of the mirror 31b.

A plurality of engagement projections 31d3 are arranged on the outer circumferential surface of the fitted cylinder section 31d2.

The contact strips 31e contact the electrodes of the high-voltage discharge lamp 31a, respectively.

The receiving port 34a of the case 34 can receive the fitted cylinder section 31d2. A plurality of engagement grooves 34a1 are cut in the inner surface of the port 34a. The engagement projections 31d3 are fitted into the engagement grooves 34a1 when the cylinder section 31d2 is set in the port 34a.

The discharge-lamp lighting device 32 has output terminals (not shown), which are provided on, for example, a wiring board and which contact the contact strips 31e of the high-voltage discharge lamp device 31.

When the cylinder section 31d2 of the high-voltage discharge lamp device 312 is set in the receiving port 34a of the case 34, the engagement projections are fitted into the engagement grooves. At the same time, the contact strips 3e contact the output terminals of the discharge-lamp lighting device 32. The high-voltage discharge lamp device 31 is thereby electrically connected to the discharge-lamp lighting device 32. The discharge-lamp lighting device 32 can therefore light the high-voltage discharge lamp device 31. In other words, the assembling is completed.

FIG. 14 is a sectional front view showing the fifth lighting apparatus embodying the present invention.

In the figure, the components identical to those shown in FIG. 11 are designated at the same reference numerals. The components will not be explained.

The present embodiment differs in that the case 34 is so shaped that it may be handled easily.

More precisely, the case 34 is streamlined, so that the lighting apparatus may be suited as a down light.

FIG. 15 is an exploded, partially sectional front view showing the sixth lighting apparatus embodying the invention.

FIG. 16 is a partially sectional front view of the apparatus, with the components assembled together.

In the figure, the components identical to those shown in FIG. 11 are designated at the same reference numerals. The components will not be explained.

The present embodiment differs in that the high-voltage discharge lamp device 31 and the discharge-lamp lighting device 32 can be separated from each other and that the lamp device 31 can be replaced by a bulb-shaped fluorescent lamp.

That is, the high-voltage discharge lamp device 31 has, at its proximal end, an electrical connection means 31f and a mechanical connection means 31g.

The electrical connection means 31f is connected to the electrodes of the high-voltage discharge lamp 31a in the high-voltage discharge lamp device 31. The electrical connection means 31f has a starting circuit connection means 31f1. The starting circuit connection means 31f is connected to one of the electrodes in the high-voltage discharge lamp device 31. The conductor extending from this electrode is connected to the other electrode or is extended to a position where it opposes the other electrode. The lighting of the lamp device can thereby be started with ease.

The mechanical connection means 31g functions to connect the high-voltage discharge lamp device 31 mechanically to the discharge-lamp lighting device 32.

The discharge-lamp lighting device 32 is provided with an electrical connection means 32a and a mechanical connection means 32b.

The electrical connection means 32a is connected to the output terminals of the device 32, in the discharge-lamp lighting device 32. The electrical connecting means 32a has a starting circuit connection means 32a1. The starting circuit connection means 32a1 is connected to the output terminal of the starting circuit in the device 32 and also to the starting circuit connection means 31f1 of the high-voltage discharge lamp device 31.

The mechanical connection means 32b cooperates with the mechanical connection means 31g of the high-voltage discharge lamp device 31, connecting the high-voltage discharge lamp device 31 and the discharge-lamp lighting device 32 together.

To accomplish mechanical connection, both mechanical connection means are pushed onto each other, or pushed onto each other and then rotated, to be connected together.

At the same time the mechanical connection means are thus mechanically connected, the electrical connection means 31f and 32b are connected together. At this time, the starting circuit connection means 31f1 and 32a1 are mutually connected, too. Hence, the high-voltage discharge lamp 31a can be lighted only if the power-receiving means 33 is connected to a power supply.

The discharge-lamp lighting device 32 can be used in combination with a bulb-shaped fluorescent lamp if this lamp is identical or similar to the lamp device 31 in rated lamp power and rated lamp voltage. In this case, the electrical connection means 35a and mechanical connection means 35b of the bulb-shaped fluorescent lamp 35 must have the same rated values as those of the high-voltage discharge lamp device 31. Numeral 35c denotes a fluorescent lamp, and numeral 35d designates a glove.

The discharge-lamp lighting device 32 is contained in the case 34, and the power-receiving means 33 is supported by the case 34. It does not matter essentially if the discharge-lamp lighting device 32 incorporates a starting circuit.

FIG. 17 is a circuit diagram showing the seventh lighting apparatus embodying the present invention.

In the figure, the components identical to those shown in FIG. 15 are designated at the same reference numerals. The components will not be explained.

The present embodiment differs in that the starting circuit 31h for the high-voltage discharge lamp 31a is incorporated in the high-voltage discharge lamp device 31.

In the figure, AC designates an alternating current source, and S denotes a lamp socket.

## Claims

1. A high-voltage discharge lamp characterized by comprising:

   a translucent ceramic discharge vessel comprising a bulging section surrounding a discharge space and small-diameter cylindrical sections communicating with the ends of the bulging section and having an inner diameter smaller than the bulging section;
   electrode-integrated power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section, and each having a distal end projecting into the bulging section of the translucent ceramic discharge vessel and forming an electrode part;
   seals made of ceramic-sealing compound, each sealing a junction between one small-diameter cylindrical section of the translucent ceramic discharge vessel and one electrode-integrated power-supplying conductor; and
   a discharge medium containing a metallic halide and filled in the translucent ceramic discharge vessel.

2. A high-voltage discharge lamp according to claim 1, characterized in that the following formula is satisfied:

$$0.2 \leq \phi H/\phi S \leq 0.6$$

   where $\phi S$ (mm) is the diameter of each seal part and $\phi H$ (mm) is the diameter of each halide-resistant part.

3. A high-voltage discharge lamp characterized by comprising:

   a translucent ceramic discharge vessel having an internal volume of 0.1 cc or less and comprising a bulging section and small-diameter cylindrical sections communicating with the ends of the bulging section, said bulging section having both ends drawn and given a continuous curved surface and having an average linear transmittance of 20% or more at a main part, and said small-diameter cylindrical sections having an inner diameter smaller than the bulging section;
   power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section,
   a pair of electrodes, each arranged at the distal end of one halide-resistant part and located in the bulging section of the translucent ceramic discharge vessel;
   seals made of ceramic-sealing compound, each sealing a junction between one small-diameter cylindrical section of the translucent ceramic discharge vessel and the seal part of one power-supplying conductor; and
   a discharge medium containing a metal halide and filled in the translucent ceramic discharge vessel.

4. A high-voltage discharge lamp according to claim 3, characterized in that the translucent ceramic discharge vessel has an internal volume of 0.05 cc or less.

5. A high-voltage discharge lamp characterized by comprising:

   a translucent ceramic discharge vessel comprising a bulging section having a maximum outer diameter $d_B$ (mm) and a length $L_B$ (mm) and a pair of small-diameter cylindrical sections connected to the ends of the bulging section, each having an outer diameter $d_T$ (mm) and a length $L_T$ (mm);
   a pair of electrodes sealed in the small-diameter cylindrical sections and located in the bulging section; and
   a discharge medium containing a light-emitting metallic halide and a rare gas and filled in the translucent ceramic discharge vessel, said vessel satisfying the following formulas:

$$1 \leq d_B/d_T \leq 3.5$$

$$1.6 \leq L_T / L_B \leq 4.5$$

6.  A high-voltage discharge lamp according to claim 5, characterized in that the translucent ceramic discharge vessel satisfies the following formulas:

$$2 \leq d_B / d_T \leq 3.2$$

$$2 \leq L_T / L_B \leq 3.7$$

7.  A high-voltage discharge lamp characterized by comprising:

    a translucent ceramic discharge vessel comprising a spherical bulging section and small-diameter cylindrical sections communicating with the ends of the bulging section and having an inner diameter smaller than the bulging section;
    power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;
    a pair of electrodes, each arranged at the distal end of one halide-resistant part and located in the bulging section of the translucent ceramic discharge vessel;
    seals made of ceramic-sealing compound, each sealing a junction between one small-diameter cylindrical section of the translucent ceramic discharge vessel and the seal part of one power-supplying conductor; and
    a discharge medium containing a metallic halide and filled in the translucent ceramic discharge vessel,
    said spherical bulging section having a ratio $R_D$ of the minor diameter to the major diameter, which satisfies the following formula:

$$0.3 \leq R_D \leq 1.0$$

8.  A high-voltage discharge lamp according to claim 7, characterized in that the ratio $R_D$ of the minor diameter to the major diameter, which satisfies the following formula:

$$0.5 \leq R_D \leq 0.95$$

9.  A high-voltage discharge lamp characterized by comprising:

    a translucent ceramic discharge vessel comprising a bulging section surrounding a discharge space and small-diameter cylindrical sections communicating with the ends of the bulging section and having an inner diameter smaller than the bulging section, said vessel having a wall-thickness difference of 0.4 mm or less;
    power-supplying conductors , each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;
    a pair of electrodes, each arranged at the distal end of one halide-resistant part and located in the bulging section of the translucent ceramic discharge vessel;
    seals made of ceramic-sealing compound, each sealing a junction between one small-diameter cylindrical section of the translucent ceramic discharge vessel and the seal part of one power-supplying conductor; and
    a discharge medium containing a metal halide and filled in the translucent ceramic discharge vessel.

10. A high-voltage discharge lamp according to claim 9, characterized in that the translucent ceramic discharge vessel is characterized in that the small wall-thickness difference is 0.2 mm or less.

11. A high-voltage discharge lamp characterized by comprising:

    a translucent ceramic discharge vessel having an overall length of 40 mm or less and comprising a bulging section and small-diameter cylindrical sections communicating with the ends of the bulging section, said bulging section having both ends drawn and given a continuous curved surface and having an average linear transmittance of 20% or more at a main part, and said small-diameter cylindrical sections having an inner diameter smaller than the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel.

**12.** A high-voltage discharge lamp according to claim 11, characterized in that the translucent ceramic discharge vessel has an over-all length of 30 mm or less.

**13.** A high-voltage discharge lamp characterized by comprising:

a translucent ceramic discharge vessel comprising a bulging section and small-diameter cylindrical sections communicating with the ends of the bulging section, said bulging section having both ends drawn and given a continuous curved surface and having an average linear transmittance of 20% or more at a main part, and said small-diameter cylindrical sections having an inner diameter smaller than the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel, wherein said lamp has a rated lamp power of 35W or less.

**14.** A high-voltage discharge lamp according to claim 13, characterized in that the rated lamp power is 20W or less.

**15.** A high-voltage discharge lamp characterized by comprising:

a translucent ceramic discharge vessel comprising a bulging section and small-diameter cylindrical sections communicating with the ends of the bulging section, said bulging section having both ends drawn and given a continuous curved surface and having an average linear transmittance of 20% or more at a main part, and said small-diameter cylindrical sections having an inner diameter smaller than the bulging section and having an average linear transmittance smaller than that of the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel.

**16.** A high-voltage discharge lamp according to any one of claims 11 to 15, characterized in that the bulging section of the translucent ceramic discharge vessel has at its main part an average linear transmittance of 30% or more.

**17.** A high-voltage discharge lamp characterized by comprising:

a translucent ceramic discharge vessel comprising a bulging section surrounding a discharge space and small-diameter cylindrical sections communicating with the ends of the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel, wherein a ratio $R_L$ of the total weight (g) to the rated lamp power (W) satisfies the following formula:

$$0.7 \times 10^{-2} \leq R_L \leq 2.5 \times 10^{-2}$$

**18.** A high-voltage discharge lamp according to claim 17, characterized in that the ratio $R_L$ of the total weight (g) to the rated lamp power (W) satisfies the following formula:

$$0.8 \times 10^{-2} \leq R_L \leq 2.0 \times 10^{-2}$$

**19.** A high-voltage discharge lamp characterized by comprising:

a translucent ceramic discharge vessel comprising a bulging section surrounding a discharge space and small-diameter cylindrical sections communicating with the ends of the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel, wherein a ratio $R_E$ of the total weight (g) of the translucent ceramic discharge vessel to the rated lamp power (W) satisfies the following formula:

$$0.5 \times 10^{-2} \leq R_E \leq 2.2 \times 10^{-2}$$

**20.** A high-voltage discharge lamp according to claim 19, characterized in that the ratio $R_E$ of the total weight (g) of the translucent ceramic discharge vessel to the rated lamp power (W) satisfies the following formula:

$$0.6 \times 10^{-2} \leq R_E \leq 1.8 \times 10^{-2}$$

**21.** A high-voltage discharge lamp characterized by comprising:

a translucent ceramic discharge vessel comprising a bulging section surrounding a discharge space and having an inner diameter $r_I$ (mm), a first small-diameter cylindrical section communicating with one end of the bulging section and having a length L1, and a second small-diameter cylindrical section communicating with the other end of the bulging section and having a length L2 (mm);

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel, wherein the inner diameter $r_I$ of the bulging section and the lengths L1 and L2 of the first and second small-diameter cylindrical sections satisfy the following formula:

$$r_I/2 < L1 < L2$$

**22.** A high-voltage discharge lamp characterized by comprising:

a translucent ceramic discharge vessel comprising a bulging section surrounding a discharge space and small-diameter cylindrical sections communicating with the ends of the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap of 0.21 mm or more between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metal halide and filled in the translucent ceramic discharge vessel.

**23.** A high-voltage discharge lamp characterized by comprising:

a translucent ceramic discharge vessel comprising a bulging section surrounding a discharge space and small-diameter cylindrical sections communicating with the ends of the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor; and

a discharge medium containing a metallic halide and filled in the translucent ceramic discharge vessel,

wherein a ratio $R_T$ of the wall thickness of each small-diameter cylindrical section of the translucent ceramic discharge vessel to the diameter of the seal part of each power-supplying conductor is 0.98 or less.

**24.** A high-voltage discharge lamp according to claim 23, characterized in that the ratio $R_T$ of the wall thickness of each small-diameter cylindrical section of the translucent ceramic discharge vessel to the diameter of the seal part of each power-supplying conductor is 0.90 or less.

**25.** A high-voltage discharge lamp characterized by comprising:

a translucent ceramic discharge vessel comprising a bulging section surrounding a discharge space and small-diameter cylindrical sections communicating with the ends of the bulging section;

power-supplying conductors, each comprising a seal part and a halide-resistant part having a proximal end connected to the distal end of the seal part and each inserted in one small-diameter cylindrical section of the translucent ceramic discharge vessel, said halide-resistant part penetrating, forming a narrow gap between the halide-resistant part and the inner surface of the small-diameter cylindrical section;

a pair of electrodes, each arranged at the distal end of one halide-resistant part and located in the bulging section of the translucent ceramic discharge vessel;

seals made of ceramic-sealing compound, each sealing a junction between one small-diameter cylindrical section of the translucent ceramic discharge vessel and the seal part of one power-supplying conductor and covering a distal portion of the seal part over a distance of 0.2 to 3 mm; and

a discharge medium containing a metal halide and filled in the translucent ceramic discharge vessel.

**26.** A high-voltage discharge lamp according any one of claims 1 and 4 to 25, characterized in that the translucent ceramic discharge vessel has an internal volume of 0.1 cc or less.

**27.** A high-voltage discharge lamp according to any one of claims 1 and 4 to 26, characterized in that the translucent ceramic discharge vessel has an internal volume of 0.05 cc or less.

**28.** A high-voltage discharge lamp according to any one of claims 1 to 27, characterized in that the translucent ceramic discharge vessel is made of YAG or yttrium oxide.

29. A high-voltage discharge lamp device characterized by comprising:

    a high-voltage discharge lamp according to any one of claims 1 to 28; and
    a reflecting mirror formed integral with the high-voltage discharge lamp and supporting the lamp, locating the luminescent center of the lamp almost at the focal point.

30. A lighting apparatus characterized by comprising:

    a high-voltage discharge lamp device according to claim 29;
    a discharge-lamp lighting device arranged at the back of the reflecting mirror; and
    power-receiving means connected to the discharge lamp lighting device.

31. A lighting apparatus according to claim 30, characterized in that the high-voltage discharge lamp device and the discharge-lamp lighting device can be disconnected from each other.

32. A lighting apparatus characterized by comprising:

    a main body; and
    a high-voltage discharge lamp according to any one of claims 1 to 28.

FIG.1

FIG.2

FIG.3

FIG.4

FIG.5

FIG. 6

FIG. 7

FIG.8

FIG.9

FIG.10

FIG.11

FIG.12

FIG. 13

FIG.14

FIG.15

EP 0 935 130 A1

FIG.16

FIG.17

## INTERNATIONAL SEARCH REPORT

| International application No. |
| --- |
| PCT/JP98/00975 |

**A. CLASSIFICATION OF SUBJECT MATTER**
Int.Cl⁶ G01M17/007, G01M15/00, B60R16/02, F02D45/00, 435

According to International Patent Classification (IPC) or to both national classification and IPC

**B. FIELDS SEARCHED**

Minimum documentation searched (classification system followed by classification symbols)
Int.Cl⁶ G01M17/00-17/007, G01M15/00, B60R16/00-16/02, F02D45/00, 435

Documentation searched other than minimum documentation to the extent that such documents are included in the fields searched

| | | | |
| --- | --- | --- | --- |
| Jitsuyo Shinan Koho | 1940-1996 | Toroku Jitsuyo Shinan Koho | 1994-1998 |
| Kokai Jitsuyo Shinan Koho | 1971-1998 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 7-43255, A (Toyota Motor Corp.), February 14, 1995 (14. 02. 95), Page 5, left column, line 37 to right column, line 49 ; Figs. 2 to 4 (Family: none) | 1-5 |
| Y | JP, 3-139094, A (Nissan Motor Co., Ltd.), June 13, 1991 (13. 06. 91), Page 2, upper left column, line 2 to lower left column, line 1 ; Fig. 1 & EP, 422507, A3 | 1-5 |
| Y | JP, 2-275336, A (Mazda Motor Corp.), November 9, 1990 (09. 11. 90), Page 3, lower left column, lines 6 to 15 ; Figs. 1 to 3 (Family: none) | 1-5 |
| A | JP, 2-8728, A (Fuji Heavy Industries Ltd.), January 12, 1990 (12. 01. 90), Full text ; Figs. 1 to 6 & US, 5005129, A & GB, 2216295, B | 1-5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| May 20, 1998 (20. 05. 98) | June 2, 1998 (02. 06. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

INTERNATIONAL SEARCH REPORT

International application No.

PCT/JP98/00975

C (Continuation). DOCUMENTS CONSIDERED TO BE RELEVANT

| Category* | Citation of document, with indication, where appropriate, of the relevant passages | Relevant to claim No. |
|---|---|---|
| A | JP, 4-238241, A (Nissan Motor Co., Ltd.), August 26, 1992 (26. 08. 92), Full text ; Figs. 1 to 9 (Family: none) | 1-5 |
| A | JP, 7-33983, B2 (Nissan Motor Co., Ltd.), April 12, 1995 (12. 04. 95), Full text ; Figs. 1 to 6 & US, 4839811, A | 1-5 |

Form PCT/ISA/210 (continuation of second sheet) (July 1992)